(19) Europäisches Patentamt
European Patent Office
Office européen des brevets

(11) **EP 4 518 213 A1**

(12) **EUROPEAN PATENT APPLICATION**
published in accordance with Art. 153(4) EPC

(43) Date of publication:
**05.03.2025 Bulletin 2025/10**

(21) Application number: **22938963.0**

(22) Date of filing: **26.04.2022**

(51) International Patent Classification (IPC):
*H04L 5/00* (2006.01)          *H04W 74/08* (2024.01)
*H04W 72/04* (2023.01)

(52) Cooperative Patent Classification (CPC):
Y02D 30/70

(86) International application number:
**PCT/CN2022/089406**

(87) International publication number:
**WO 2023/206107 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **QIAO, Xuemei
Beijing 100085 (CN)**

(74) Representative: **Dehns Germany Partnerschaft
mbB
Theresienstraße 6-8
80333 München (DE)**

(54) **TERMINAL DEVICE SCHEDULING METHOD AND APPARATUS THEREOF**

(57) The present disclosure provides a terminal device scheduling method and an apparatus thereof, applicable to the technical field of communications. The method comprises: a network device can determine a physical layer channel/signal processing capability of a terminal device according to a random access message and/or random access message feedback sent by the terminal device, so that subsequent transmission of the terminal device can be scheduled in a targeted manner according to the processing capability of the terminal device. On one hand, no additional PRACH resources are required to indicate and determine the physical layer channel/signal processing capability of the terminal device, thereby saving PRACH resources and also avoiding a PRACH resource selection conflict which results in reducing the success rate of random access and increasing the random access delay; on the other hand, for terminal devices of different processing capabilities, different resources can be allocated to subsequent transmission of the terminal devices, so that the terminal devices perform message transmission by scheduling reasonably allocated resources, thereby increasing the resource utilization rate.

a random access message and/or a random access message feedback is sent to a network device; a PUSCH occupied by the random access message corresponds to a physical layer channel/signal processing capability of the terminal, and/or the random access message carries indication information corresponding to the physical layer channel/signal processing capability of the terminal; a PUCCH occupied by the random access message feedback corresponds to the physical layer channel/signal processing capability of the terminal

~201

FIG. 2

## Description

### FIELD

The present invention relates to the field of communication technology, and more particularly to a method and apparatus for scheduling a terminal.

### BACKGROUND

Currently, a plurality of terminals can access a serving cell, such as terminals that have a relaxed processing capability, terminals that have an unrelaxed processing capability, etc. Terminals with different processing capabilities have different PDSCH (physical downlink shared channel) processing procedure times and different PUSCH (physical uplink shared channel) processing procedure times. For the above two types of terminals which differ in processing capability, if the network device schedules all the terminals accessed to the service cell according to the unrelaxed processing capability, terminals with the relaxed processing capability will not have enough time to process or prepare for the PDSCH or PUSCH, so that it is difficult for terminals with the relaxed processing capability to send a random access message normally.

For the above situation, a terminal can report its processing capability to the network device, so that the network device can schedule the transmission of a subsequent random access message of the terminal according to the processing capability of the terminal. In the related art, the terminal can report its own processing capability to the network device via a separate PRACH resource.

However, in R17, RedCap (reduced capability) terminals, SDT (small data transmission), slices, coverage enhancement, etc., all need to use separate PRACH (physical random access channel) resources. Due to limited PRACH resources, it may not be possible to allocate separate PRACH resources for terminals. Moreover, excessive division of the PRACH resources may increase the probability of PRACH resource selection conflict, reduce the success rate of random access, and increase the random access delay.

### SUMMARY

Embodiments of the present invention provide a method and apparatus for scheduling a terminal, which may be applied in the field of communication technology, and can indicate and determine a physical layer channel/signal processing capability of a terminal without using additional PRACH resources, thereby not only saving the PRACH resource, but also avoiding the PRACH resource selection conflict and thus avoiding reduction in success rate of random access and increase in random access delay caused by the PRACH resource selection conflict.

In a first aspect, embodiments of the present invention provide a method for scheduling a terminal device, which is performed by the terminal device, and includes: sending a random access message and/or a random access message feedback to a network device. A physical uplink shared channel (PUSCH) occupied by the random access message corresponds to a physical layer channel/signal processing capability of the terminal device, and/or the random access message carries indication information corresponding to the physical layer channel/signal processing capability of the terminal device; a physical uplink control channel (PUCCH) occupied by the random access message feedback corresponds to the physical layer channel/signal processing capability of the terminal device.

In a second aspect, embodiments of the present invention provide another method for scheduling a terminal, which is performed by a network device, and includes: receiving a random access message and/or a random access message feedback sent by a terminal; and scheduling a subsequent transmission of the terminal according to a processing delay corresponding to the random access message and/or the random access message feedback. A physical uplink shared channel (PUSCH) occupied by the random access message corresponds to a physical layer channel/signal processing capability of the terminal, and/or the random access message carries indication information corresponding to the physical layer channel/signal processing capability of the terminal; a physical uplink control channel (PUCCH) occupied by the random access message feedback corresponds to the physical layer channel/signal processing capability of the terminal.

In a third aspect, embodiments of the present invention provide an apparatus for scheduling a terminal, which is applied to a terminal, and has some or all of functions for implementing the method as described in the first aspect above. For example, the apparatus for scheduling a terminal may have functions as described in some or all of embodiments in the present invention, or may also have functions for separately implementing any of embodiments in the present invention. The functions may be implemented by hardware, or may be implemented by executing a corresponding software on the hardware. The hardware or the software includes one or more elements or modules corresponding to the above functions.

In an implementation, the structure of the apparatus for scheduling a terminal may include a transceiver module and a processing module, and the processing module is configured to support the apparatus for scheduling a terminal to perform corresponding functions in the above method. The transceiver module is configured to support the communication between the apparatus for scheduling a terminal and other devices. The apparatus for scheduling a terminal may also include a storage module which is configured to couple with the transceiver module and the processing module, and stores computer programs and data necessary for the apparatus for scheduling a terminal.

As an example, the processing module may be a processor, the transceiver module may be a transceiver or a communication interface, and the storage module may be a memory.

In a fourth aspect, embodiments of the present invention provide another apparatus for scheduling a terminal, which is applied to a network device, and has some or all of functions for implementing the method as described in the second aspect above. For example, the apparatus for scheduling a terminal may have functions as described in some or all of the embodiments in the present invention, or may also have functions for separately implementing any of embodiments in the present invention. The functions may be implemented by hardware, or may be implemented by executing a corresponding software on the hardware. The hardware or the software includes one or more elements or modules corresponding to the above functions.

In an implementation, the structure of the apparatus for scheduling a terminal may include a transceiver module and a processing module, and the processing module is configured to support the apparatus for scheduling a terminal to perform corresponding functions in the above method. The transceiver module is configured to support the communication between the apparatus for scheduling a terminal and other devices. The apparatus for scheduling a terminal may also include a storage module which is configured to couple with the transceiver module and the processing module, and stores computer programs and data necessary for the apparatus for scheduling a terminal.

As an example, the processing module may be a processor, the transceiver module may be a transceiver or a communication interface, and the storage module may be a memory.

In a fifth aspect, embodiments of the present invention provide a communication apparatus, which includes a processor; and a memory having stored therein a computer program, and the processor is configured to execute the computer program stored in the memory, to cause the communication apparatus to perform the method according to the first aspect above.

In a sixth aspect, embodiments of the present invention provide a communication apparatus, which includes a processor; and a memory having stored therein a computer program, and the processor is configured to execute the computer program stored in the memory, to cause the communication apparatus to perform the method according to the second aspect above.

In a seventh aspect, embodiments of the present invention provide a communication apparatus, which includes a processor and an interface circuit, the interface circuit is configured to receive code instructions and transmit the code instructions to the processor, and the processor is configured to run the code instructions to cause the communication apparatus to perform the method according to the first aspect above.

In an eighth aspect, embodiments of the present invention provide a communication apparatus, which includes a processor and an interface circuit, the interface circuit is configured to receive code instructions and transmit the code instructions to the processor, and the processor is configured to run the code instructions to cause the communication apparatus to perform the method according to the second aspect above.

In a ninth aspect, embodiments of the present invention provide a communication system, which includes the communication apparatus described in the third aspect and the communication apparatus described in the fourth aspect, or the system includes the communication apparatus described in the fifth aspect and the communication apparatus described in the sixth aspect, or the system includes the communication apparatus described in the seventh aspect and the communication apparatus described in the eighth aspect.

In a tenth aspect, embodiments of the present invention provide a computer-readable storage medium having stored therein instructions for use in the above terminal, and the instructions, when executed, cause the terminal to perform the method according to the first aspect above.

In an eleventh aspect, embodiments of the present invention provide a readable storage medium having stored therein instructions for use in the above network device, and the instructions, when executed, cause the network device to perform the method according to the second aspect above.

In a twelfth aspect, the present invention further provides a computer program product, which includes a computer program that, when run on a computer, causes the computer to implement the method according to the first aspect above.

In a thirteenth aspect, the present invention further provides a computer program product, which includes a computer program that, when run on a computer, causes the computer to implement the method according to the second aspect above.

In a fourteenth aspect, the present invention provides a chip system, which includes at least one processor and an interface, for supporting a terminal to implement functions involved in the first aspect, for example, to determine or process at least one of data and information involved in the above method. In a possible design, the chip system further includes a memory for storing computer programs and data necessary for the terminal. The chip system may consist of chips, or may include chips and other discrete devices.

In a fifteenth aspect, the present invention provides a chip system, which includes at least one processor and an interface, for supporting a network device to implement functions involved in the second aspect, for example, to determine or process at least one of data and information involved in the above method. In a possible design, the chip system further includes a memory for storing computer programs and data necessary for the network device. The chip system may consist of chips, or may include chips and other discrete devices.

In a sixteenth aspect, the present invention provides a computer program that, when run on a computer, causes the computer to perform the method according to the first aspect above.

In a seventeenth aspect, the present invention provides a computer program that, when run on a computer, causes the computer to perform the method according to the second aspect above.

## BRIEF DESCRIPTION OF THE DRAWINGS

In order to clearly illustrate the technical solutions in embodiments of the present invention or in the related art, drawings to be used for the description of embodiments of the present invention or the related art are described below.

FIG. 1 is a schematic architectural diagram of a communication system according to embodiments of the present invention;

FIG. 2 is a schematic flowchart of another method for scheduling a terminal according to embodiments of the present invention;

FIG. 3 is a schematic flowchart of another method for scheduling a terminal according to embodiments of the present invention;

FIG. 4 is a schematic flowchart of another method for scheduling a terminal according to embodiments of the present invention;

FIG. 5 is a schematic flowchart of another method for scheduling a terminal according to embodiments of the present invention;

FIG. 6 is a schematic flowchart of another method for scheduling a terminal according to embodiments of the present invention;

FIG. 7 is a schematic flowchart of another method for scheduling a terminal according to embodiments of the present invention;

FIG. 8 is a schematic flowchart of another method for scheduling a terminal according to embodiments of the present invention;

FIG. 9 is a schematic flowchart of another method for scheduling a terminal according to embodiments of the present invention;

FIG. 10 is a schematic flowchart of another method for scheduling a terminal according to embodiments of the present invention;

FIG. 11 is a schematic flowchart of another method for scheduling a terminal according to embodiments of the present invention;

FIG. 12 is a schematic flowchart of another method for scheduling a terminal according to embodiments of the present invention;

FIG. 13 is a schematic flowchart of another method for scheduling a terminal according to embodiments of the present invention;

FIG. 14 is a schematic flowchart of an apparatus for scheduling a terminal according to embodiments of the present invention;

FIG. 15 is a schematic block diagram of a communication apparatus according to embodiments of the present invention; and

FIG. 16 is a schematic block diagram of a chip according to embodiments of the present invention.

## DETAILED DESCRIPTION

For ease of understanding, terms involved in the present invention is first introduced.

1. PUSCH (physical uplink shared channel)

The PUSCH is used to carry uplink high-layer/physical layer control signaling and user data.

2. PDSCH (physical downlink shared channel)

The PDSCH is used to carry downlink high-level control signaling and user data.

3. PDCCH (physical downlink control channel)

The PDCCH channel transmits DCI (downlink control information) related to the physical uplink and downlink shared channels (PUSCH, PDSCH). For example, the DCI information includes RB (resource block) allocation information, an HARQ (hybrid automatic repeat request) process identifier and other related content. Only when the terminal correctly decodes the DCI information can it correctly process the PDSCH data or PUSCH data.

4. BWP (bandwidth part)

BWP is a subset bandwidth of a terminal channel bandwidth. It flexibly adjusts the size of receiving and transmitting bandwidths of a terminal through bandwidth adaptation in NR, so that the receiving and transmitting bandwidths of the terminal do not need to be as large as a bandwidth of a cell. The terminal can only activate one UL (uplink) BWP and one DL (downlink) BWP at the same time. Each BWP is configured with an SCS (subcarrier spacing), and all signals and channels on the BWP use this SCS, unless specified otherwise.

5. HARQ (hybrid automatic repeat request)

The HARQ is a new communication technology developed based on FEC (forward error correction) and ARQ (automatic repeat request) for better interference resistance and better attenuation resistance and for improving system throughput (effectiveness) and data transmission reliability.

In order to better understand the method and apparatus for scheduling a terminal disclosed in embodiments of the present invention, a communication system to which embodiments of the present invention are applicable is first described below.

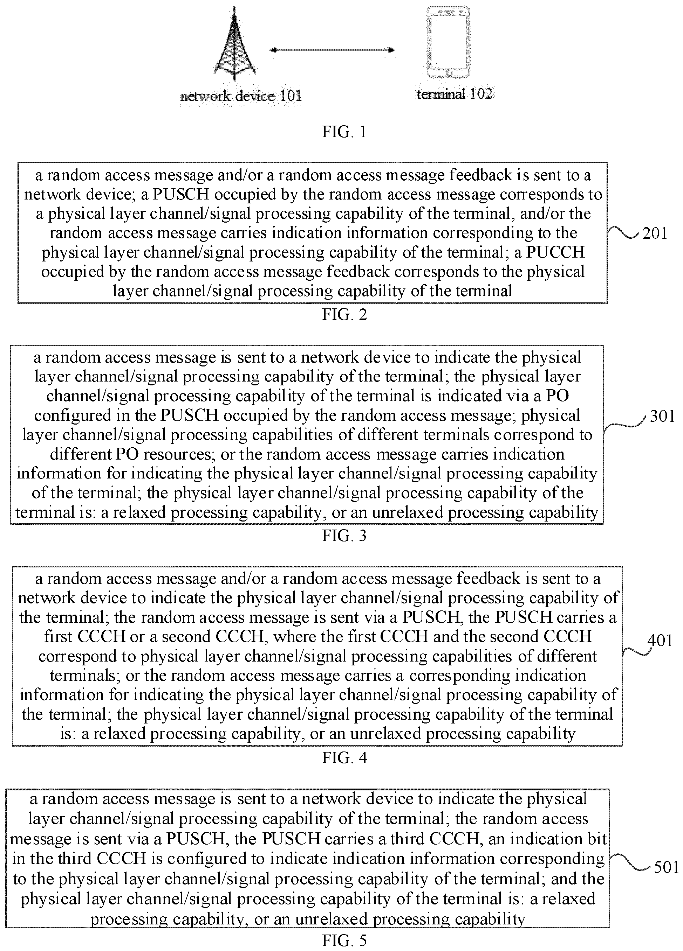

Referring to FIG. 1, which is a schematic architectural diagram of a communication system according to embodiments of the present invention. The communication system may include, but not limited to, a network device and a terminal. The number and forms of the devices shown in FIG. 1 are only used as an example and do not constitute a limitation on embodiments of the present invention. The communication system may include two or more network devices and two or more terminals in practical applications. As an example for illustration, the communication system shown in FIG. 1 includes one network device and one terminal.

It should be noted that the technical solutions of embodiments of the present invention may be applied to various communication systems, for example, a long term evolution (LTE) system, a 5th generation (5G) mobile communication system, a 5G new radio (NR) system, or other new mobile communication systems in the future.

The network device 101 in embodiments of the present invention is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal 102 in embodiments of the present invention is an entity at a user side for receiving or sending signals, such as a mobile phone. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present invention do not limit the specific technique and the specific device form adopted by the terminal.

It can be understood that the communication system described in embodiments of the present invention is intended to illustrate the technical solutions of embodiments of the present invention more clearly, and does not constitute a limitation on the technical solutions according to embodiments of the present invention. Those of ordinary skill in the art will know that with the evolution of the system architecture and the emergence of new service scenarios, the technical solutions according to embodiments of the present invention are also applicable to similar technical problems.

In the above communication system, a calculation formula of a PDSCH processing procedure time of a terminal is as follows:

$$T_{proc,1} = \left(N_1 + d_{1,1}\right)(2048 + 144) \cdot \kappa 2^{-\mu} \cdot T_c; \ (1),$$

where $T_{proc,1}$ represents the PDSCH processing procedure time of the terminal; a value of $N_1$ is related to a value of $\mu$ of the terminal; the value of $\mu$ has a correspondence with a subcarrier spacing and can be determined according to the subcarrier spacing; $d_{1,1}$ represents a processing time in a specific case where a PDSCH mapping manner is A or B, $T_C$ is a basic time unit in the communication system, $\kappa$ is defined in Article 4.1 of the 3GPP standard TS38.214, namely $\kappa = \dfrac{T_s}{T_c} = 64$,

where $T_s = \dfrac{1}{\triangle f_{ref}*N_{f,ref}}$, $\triangle f_{ref} = 15 * 10^3$Hz, $N_{f,ref} = 2048$, $T_c = \dfrac{1}{\triangle f_{max}*N_f}$, $\triangle f_{max} = 480 * 10^3$Hz, $N_f = 4096$.

As an example, the value of $N_1$ may be as shown in Table 1.

Table 1. PDSCH processing time of PDSCH processing capability 1

| $\mu$ | PDSCH decoding time $N_1$ [symbols] |
|---|---|
| 0 | 8 |
| 1 | 10 |
| 2 | 17 |
| 3 | 20 |

It can be understood that each element and each correspondence in Table 1 exists independently; these elements and correspondences are listed in the same table as an example, but it does not indicate that all elements and correspondences in the table must exist at the same time as shown in Table 1. The value of each element and each correspondence do not depend on the value of any other element or any other correspondence in Table 1. Therefore, those skilled in the art can understand that the value of each element and each correspondence in Table 1 represent an independent embodiment, respectively.

The PDSCH processing procedure of the terminal includes: a PDSCH decoding procedure and a PUCCH preparation procedure. Correspondingly, the PDSCH processing procedure time $T_{proc,1}$ of the terminal includes a PDSCH decoding time and a PUCCH preparation time. After $T_{proc,1}$ from the end of the last symbol of PDSCH transmission, the terminal performs a HARQ-ACK feedback. When the network device indicates a time domain resource for the HARQ-ACK feedback, the network device needs to consider the PDSCH decoding time and PUCCH preparation time of the terminal.

In Release 15, a calculation formula of a PUSCH processing procedure time of a terminal is as follows:

$$T_{proc,2} = \max(\left(N_2 + d_{2,1}\right)(2048 + 144) \cdot \kappa 2^{-\mu} \cdot T_c, \ d_{2,2}) \ ; (2)$$

where $T_{proc,2}$ represents the PUSCH processing procedure time of the terminal, the terminal performs the PUSCH transmission after $T_{proc,2}$ from the time when scheduling DCI is received, that is, a time interval K2 between a transmission end time point at which the DCI is received by the terminal and a transmission start time point at which the terminal performs the PUSCH transmission meets $K2 \geq T_{proc,2}$; and when the network device schedules the PUSCH, it needs to consider the PUSCH processing procedure time of the terminal; a value of $N_2$ is related to a value of $\mu$ of the terminal; $d_{2,1}$ represents a processing time when a DMRS (demodulation reference signal) is configured under a specific case, when a first symbol of a time domain resource allocated by the PUSCH only contains the DMRS, $d_{2,1}=0$, otherwise, $d_{2,1}=1$; and $d_{2,2}$ represents a delay introduced by BWP switching, if DCI triggers the uplink BWP switch, then $d_{2,2}$ is the BWP switching delay, otherwise, $d_{2,2}=0$.

As an example, the value of $N_2$ may be as shown in Table 2.

Table 2. PUSCH preparation time $N_2$

| $\mu$ | PUSCH preparation time $N_2$ [symbols] |
|---|---|
| 0 | 10 |

(continued)

| μ | PUSCH preparation time $N_2$ [symbols] |
|---|---|
| 1 | 12 |
| 2 | 23 |
| 3 | 36 |

It can be understood that each element and each correspondence in Table 2 exists independently; these elements and correspondences are listed in the same table as an example, but it does not indicate that all elements and correspondences in the table must exist at the same time as shown in Table 2. The value of each element and each correspondence do not depend on the value of any other element or any other correspondence in Table 2. Therefore, those skilled in the art can understand that the value of each element and each correspondence in Table 2 represent an independent embodiment, respectively.

For a two-step random access process, a minimum processing time (or processing delay) requirement of the terminal is that: after $N_{T,1}$+0.75 ms from the time when a MsgB is received by the terminal, the terminal performs ACK feedback, for example, a time interval K1 between a transmission end time point of the MsgB and a transmission start time point of the ACK feedback meets K1 $\geq N_{T,1}$+0.75ms. $N_{T,1}$ represents $N_1$ in the calculation formula of the PDSCH processing procedure time of the terminal having an unrelaxed processing capability.

As an example, the PUSCH preparation time (or called preparation delay) of a normal terminal (UE processing capability 1) may be relaxed to N times. For example, assuming that N is 2, the PUSCH preparation time may be as shown in Table 3.

Table 3. PUSCH preparation time $N_2$

| μ | PUSCH preparation time $N_2$ [symbols] |
|---|---|
| 0 | 8->16 |
| 1 | 10->20 |
| 2 | 17->34 |
| 3 | 20->40 |

It can be understood that each element and each correspondence in Table 3 exists independently; these elements and correspondences are listed in the same table as an example, but it does not indicate that all elements and correspondences in the table must exist at the same time as shown in Table 3. The value of each element and each correspondence do not depend on the value of any other element or any other correspondence in Table 3. Therefore, those skilled in the art can understand that the value of each element and each correspondence in Table 3 represent an independent embodiment, respectively.

In Table 3, the value at the left side of "->" represents the PUSCH preparation time of a normal terminal, and the value at the right side of "->" represents the PUSCH preparation time of eRedcap (evolved reduced capability) terminal after relaxing its processing capability.

In Release 18, it is proposed to relax the processing delay of terminal: the PDSCH processing time (N1) and the PUSCH preparation time (N2). For example, the processing delay is relaxed to M times of the UE capability 1 in Release 16 to reduce terminal costs. In the above example, M=2 is used for explanation, but the present invention is not limited thereto.

Device costs of the terminal mainly include:

Baseband: receiver processing block (channel estimation, demodulation, demapping, frequency equalization, RSRP (reference signal receiving power)/RSR (reference signal receiving) estimation and CSI (channel state information) processing);
Baseband: LDPC (low density parity check) decoding;
Baseband: DL control processing and decoder;
Baseband: UL processing block (generation and modulation of reference signals, preparation of PUSCH and PUCCH).

An influencing factor of the processing delay is that the processing is processed by a slower processor.

In the eRedcap project, the PDSCH processing delay and the PUSCH preparation delay may be relaxed for terminals of certain service types (such as non-security sensors like factory sensors).

In embodiments of the present invention, according to different channel processing delays, terminals may be divided into two types: terminals with a relaxed processing capability and terminals with an unrelaxed processing capability. It can be understood that a terminal with the relaxed processing capability refers to a terminal that has relaxed the processing capability of physical layer channels or physical layer signals, with a relatively long channel processing delay; and a terminal with the unrelaxed processing capability refers to a terminal that has not relaxed the processing capability of physical layer channels or physical layer signals, with relatively short channel processing delay.

In a possible implementation, the terminal with the relaxed processing capability may be a reduced capability terminal with the relaxed processing capability, such as an evolved reduced-capability terminal (eRedCap UE). Regarding the terminal with the unrelaxed processing capability, in embodiments of the present invention, it may also be called non-eRedCap UE, which may include at least one of: a normal reduced-capability terminal (RedCap UE) and a normal terminal (normal UE, also called non-RedCap UE). Of course, since there are three types of UEs (eRedCap UE, RedCap UE, and normal UE), various solutions regarding the relaxed processing capability may be adopted; that is, in the comparison of the eRedCap UE and the RedCap UE, the channel processing capability of the RedCap UE is not relaxed, while the channel processing capability of the eRedCap UE is relaxed; in the comparison of the RedCap UE and the non-RedCap UE, the channel processing capability of both the normal UE and the RedCap UE is not relaxed. In a possible implementation, for the relaxation processing parameter, the three types of UEs may have the following relationships: eRedCap UE > RedCap UE, eRedCap UE > normal UE; that is, the relaxation processing delay of the eRedCap UE with the relaxed processing capability is the largest, while the processing capability of the RedCap UE and the normal UE is not relaxed, that is, the relaxation processing delay of the RedCap UE and the normal UE is small.

In another possible implementation, the terminal with the relaxed processing capability may include at least one of: the reduced-capability terminal with the relaxed processing capability (also called the eRedCap UE), or a normal terminal with the relaxed processing capability; and the terminal with the unrelaxed processing capability may include at least one of: the normal reduced-capability terminal (RedCap UE) or the normal terminal (normal UE, also called non-RedCap UE).

In the related art, a terminal can report its own processing capability to the network device via a separate PRACH resource.

However, in R17, RedCap terminals, SDTs, slices, coverage enhancement, etc., all need to use separate PRACH resources. Due to limited PRACH resources, it may not be possible to allocate separate PRACH resources for terminals. Moreover, excessive division of the PRACH resources may increase the probability of PRACH resource selection conflict, reduce the success rate of random access, and increase the random access delay.

In view of the above problems, embodiments of the present invention provide a method and apparatus for scheduling a terminal.

Referring to FIG. 2, which is a schematic flowchart of a method for scheduling a terminal according to embodiments of the present invention, the method may be performed by the terminal in FIG. 1. As shown in FIG. 2, the method may include, but not limited to, a following step.

In step 201, a random access message and/or a random access message feedback is sent to a network device. A PUSCH occupied by the random access message corresponds to a physical layer channel/signal processing capability of the terminal, and/or the random access message carries indication information corresponding to the physical layer channel/signal processing capability of the terminal; a PUCCH occupied by the random access message feedback corresponds to the physical layer channel/signal processing capability of the terminal.

In embodiments of the present invention, the physical layer channel/signal refers to the physical layer channel or the physical layer signal. Correspondingly, the physical layer channel/signal processing capability of the terminal refers to a capability of the terminal to process the physical layer channel or a capability of the terminal to process the physical layer signal.

As an example, the physical layer channel/signal processing capability of the terminal may be a relaxed processing capability.

As another example, the physical layer channel/signal processing capability of the terminal may be an unrelaxed processing capability.

In embodiments of the present invention, the physical layer channel/physical layer signal includes one or more of: a PRACH (physical random access channel), a PUSCH, a PDSCH, a PUCCH (physical uplink control channel), a PDCCH (physical downlink control channel), a CSI-RS (channel state information reference signal), an SRS (sounding reference signal), a PTRS (phase tracking reference signal), phase tracking reference signal), or a TRS (tracking reference signal).

The processing capability on the CSI-RS refers to a capability to calculate a feedback of the CSI-RS. The feedback of the CSI-RS includes such as a PMI (precoding matrix indicator), an RI (rank indication), a CQI (channel quality indicator), etc.

In embodiments of the present invention, the random access message refers to an interaction message between the terminal and the network device in the random access process. For example, for two-step random access, the interaction information may include a random access message A (MsgA) and a random access message B (MsgB). For four-step random access, the interaction information may include a Msg1, a Msg2, a Msg3 and a Msg4.

In embodiments of the present invention, the random access message feedback refers to a feedback corresponding to the random access message (such as HARQ-ACK feedback, HARQ-NACK feedback). For example, the random access message feedback may be a feedback corresponding to the random access message in the last step.

As an example, for two-step random access, the random access message feedback may be the feedback of the random access message B (MsgB), and for four-step random access, the random access message feedback may be the feedback of the Msg4.

In a possible implementation of embodiments of the present invention, the terminal may send a random access message to the network device. The PUSCH resource for carrying the random access message corresponds to the physical layer channel/signal processing capability of the terminal, and/or the random access message carries the indication information corresponding to the physical layer channel/signal processing capability of the terminal. Correspondingly, after receiving the random access message, the network device may schedule a subsequent transmission of the terminal according to a processing delay corresponding to the random access message.

That is, in the present invention, the physical layer channel/signal processing capability of the terminal may be indicated in the random access message, and/or the physical layer channel/signal processing capability of the terminal may be indicated according to the determined PUSCH resource for carrying the random access message.

As an example, when the network device determines that the physical layer channel/signal processing capability of the terminal is the unrelaxed processing capability according to the random access message, the processing delay corresponding to the random access message is relatively small, and the network device may schedule the subsequent transmission of the terminal according to the relatively small processing delay; when the network device determines that the physical layer channel/signal processing capability of the terminal is the relaxed processing capability according to the random access message, the processing delay corresponding to the random access message is relatively large, and the network device may schedule the subsequent transmission of the terminal according to the relatively large processing delay.

In another possible implementation of embodiments of the present invention, the terminal may send the random access message feedback to the network device. The PUCCH resource for carrying the random access message feedback (i.e., feedback information corresponding to the random access message) correspond to the physical layer channel/signal processing capability of the terminal. Accordingly, after receiving the random access message feedback, the network device may schedule the subsequent transmission of the terminal according to the processing delay corresponding to the random access message feedback.

That is, in the present invention, the physical layer channel/signal processing capability of the terminal may be determined according to the PUCCH resource determined for carrying the random access message feedback.

As an example, when the network device determines that the physical layer channel/signal processing capability of the terminal is the unrelaxed processing capability according to the random access message feedback, the processing delay corresponding to the random access message is relatively small, and the network device may schedule the subsequent transmission of the terminal according to the relatively small processing delay; when the network device determines that the physical layer channel/signal processing capability of the terminal is the relaxed processing capability according to the random access message feedback, the processing delay corresponding to the random access message is relatively large, and the network device may schedule the subsequent transmission of the terminal according to the relatively large processing delay.

In another possible implementation of embodiments of the present invention, the terminal may send the random access message to the network device. Correspondingly, after receiving the random access message, the network device may schedule the subsequent transmission of the terminal according to the processing delay corresponding to the random access message. In addition, the terminal may also send the random access message feedback to the network device. Correspondingly, after receiving the random access message feedback, the network device may schedule the subsequent transmission of the terminal according to the processing delay corresponding to the random access message feedback.

As a result, for terminals with different processing capabilities, the network device can allocate different resources for their subsequent transmissions, so that terminals can transmit messages via reasonably allocated resources, thereby avoiding resource rescheduling caused by failed message transmission, avoiding waste of resources, and improving resource utilization.

Terminals with different processing capabilities mean that the terminals have different capabilities in processing the physical layer channel, or the terminals have different capabilities in processing the physical layer signal.

In the method for scheduling a terminal according to embodiments of the present invention, the terminal may send the random access message and/or the random access message feedback to the network device; the PUSCH occupied by the random access message corresponds to the physical layer channel/signal processing capability of the terminal, and/or the random access message carries the indication information corresponding to the physical layer channel/signal processing capability of the terminal; the PUCCH occupied by the random access message feedback corresponds to the physical layer channel/signal processing capability of the terminal, correspondingly, after receiving the random access message and/or the random access message feedback sent by the terminal, the network device can determine the physical layer channel/signal processing capability of the terminal according to the random access message and/or the random access message feedback, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

Referring to FIG. 3, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 3, the method may include, but not limited to, a following step.

In step 301, a random access message is sent to a network device to indicate the physical layer channel/signal processing capability of the terminal. The physical layer channel/signal processing capability of the terminal is indicated via a PUSCH occasion (PO) configured in the PUSCH occupied by the random access message; physical layer channel/signal processing capabilities of different terminals correspond to different PO resources; or the random access message carries indication information for indicating the physical layer channel/signal processing capability of the terminal.

The physical layer channel/signal processing capability of the terminal is: a relaxed processing capability, or an unrelaxed processing capability.

It should be noted that for the explanation of the random access message, reference may be made to the relevant description in any embodiment of the present invention, which will not be described again here.

In embodiments of the present invention, the network device configures separate PUSCH resources for terminals with different processing capabilities respectively through a separate PUSCH configuration signaling, that is, the PUSCH resource carrying the random access message corresponds to the physical layer channel/physical layer signal processing capability of the terminal. The PUSCH configuration signaling is a configuration signaling for configuring the PUSCH.

As a possible implementation, when the physical layer channel/physical layer signal processing capability of the terminal is the relaxed processing capability, a PO resource configured by a first PUSCH configuration signaling may be used as a first PO resource. When the physical layer channel/signal processing capability of the terminal is the unrelaxed processing capability, a PO resource configured by a second PUSCH configuration signaling may be used as a second PO resource. The first PO resource is a different PO resource from the second PO resource.

As an example, a separate (or new) PO resource (denoted as the first PO resource in the present invention) may be configured for a terminal whose physical layer channel/physical layer signal processing capability is the relaxed processing capability, and the relaxed terminal can use the first PO resource to perform PUSCH transmission. The terminal whose physical layer channel/physical layer signal processing capability is the unrelaxed processing capability can use an original PO resource (denoted as the second PO resource in the present invention) to perform PUSCH transmission. The first PO resource and the second PO resource are different PO resources.

Therefore, the network device can determine the physical layer channel/signal processing capability of the terminal according to the PO resource configured in the PUSCH occupied by the random access message. For example, when the PO resource configured in the PUSCH is the first PO resource, it is determined that the physical layer channel/signal processing capability of the terminal is the relaxed processing capability. When the PO resource configured in the PUSCH is the second PO resource, it is determined that the physical layer channel/signal processing capability of the terminal is the unrelaxed processing capability.

In a possible implementation of embodiments of the present invention, the first PO resource and the second PO resource may have a mapping relationship with a preamble sequence of the PRACH.

As an example, there is no need to configure a separate PRACH resource for the terminal whose physical layer channel/signal processing capability is relaxed. The preamble sequence in an original PRACH slot is not only associated with the second PO resource (i.e., original PO resource) configured for the terminal whose physical layer channel/signal processing capability is the unrelaxed processing capability, but also needs to be mapped to the first PO resource (i.e., the newly added PO resource) configured for the terminal whose physical layer channel/signal processing capability is the relaxed processing capability.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal; correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 4, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 4, the method may include, but not limited to, a following step.

In step 401, a random access message is sent to a network device to indicate the physical layer channel/signal processing capability of the terminal; the random access message is sent via a PUSCH, and the PUSCH carries a first CCCH (common control channel) or a second CCCH, where the first CCCH and the second CCCH correspond to physical layer channel/signal processing capabilities of different terminals; or the random access message carries a corresponding indication information for indicating the physical layer channel/signal processing capability of the terminal.

The physical layer channel/signal processing capability of the terminal is: the relaxed processing capability, or the unrelaxed processing capability.

The PUSCH occupied by the random access message corresponds to the physical layer channel/signal processing capability of the terminal, or the PUCCH occupied by the random access message feedback corresponds to the physical layer channel/signal processing capability of the terminal; the terminal indicates the physical layer channel/signal processing capability of the terminal by sending the first CCCH or the second CCCH.

The PUCCH occupied by the random access message feedback corresponds to the physical layer channel/signal processing capability of the terminal.

It should be noted that for the explanation of the random access message and/or the random access message feedback, reference may be made to the relevant description in any embodiment of the present invention, which will not be described again here.

In embodiments of the present invention, in step 401, when the physical layer channel/signal processing capability of the terminal is the relaxed processing capability, the PUSCH carries the first CCCH, that is, when the CCCH carried by the PUSCH occupied by the random access message is the first CCCH, the PUSCH corresponds to the physical layer channel/signal processing capability that is the relaxed processing capability.

In embodiments of the present invention, in step 401, when the physical layer channel/signal processing capability of the terminal is the unrelaxed processing capability, the PUSCH carries the second CCCH, that is, when the CCCH carried by the PUSCH occupied by the random access message is the second CCCH, the PUSCH corresponds to the physical layer channel/signal processing capability that is the unrelaxed processing capability.

The first CCCH has a different logical channel identifier (LCID) from that of the second CCCH, and the terminal can indicate that the physical layer channel/signal processing capability of the terminal is the relaxed processing capability by sending the first CCCH, the terminal can indicate that the physical layer channel/signal processing capability of the terminal is the unrelaxed processing capability by sending the second CCCH.

As an example, a new CCCH (denoted as the first CCCH in the present invention) may be introduced for the terminal whose physical layer channel/physical layer signal processing capability is the relaxed processing capability, the terminal whose physical layer channel/physical layer signal processing capability is the unrelaxed processing capability can use an original CCCH (denoted as the second CCCH in the present invention), and the new CCCH and the original CCCH are distinguished by using different LCIDs.

In a possible implementation of embodiments of the present invention, an additional bit may be set in the first CCCH to indicate the physical layer channel/signal processing capability of the terminal.

As an example, the physical layer channel/signal processing capability of the terminal includes a PUSCH processing capability and/or a PDSCH processing capability, and additional 2 bits may be set in the first CCCH to indicate the PUSCH processing capability and/or the PDSCH processing capability of the terminal.

For example, capability combinations of the PUSCH processing capability and the PDSCH processing capability may include the following four combinations: a first capability combination where the PUSCH processing capability is the relaxed processing capability, and the PDSCH processing capability is the relaxed processing capability; a second capability combination where the PUSCH processing capability is the relaxed processing capability, and the PDSCH processing capability is the unrelaxed processing capability; a third capability combination where the PUSCH processing capability is the unrelaxed processing capability, and the PDSCH processing capability is the relaxed processing capability; a fourth capability combination where the PUSCH processing capability is the unrelaxed processing capability, and the PDSCH processing capability is the unrelaxed processing capability.

For an eRedcap UE with the relaxed processing capability, the additional 2 bits set in the first CCCH may indicate the first capability combination by "11", indicate the second capability combination by "10", indicate third capability combination by "01", and indicate the fourth capability combination by "00"; or the additional 2 bits set in the first CCCH may indicate the fourth capability combination by "11", indicate the third capability combination by "10", indicate the second capability combination by "01", and indicate the first capability combination by "00", or the like.

As another example, for a terminal with the relaxed processing capability, the first CCCH may be used to transmit the Mag3. Further, 2 bits in the Msg3 may be used to indicate the PUSCH processing capability and/or the PDSCH processing capability of the terminal.

For example, the 2 bits in the Msg3 may indicate the first capability combination by "11", indicate the second capability combination by "10", indicate third capability combination by "01", and indicate the fourth capability combination by "00"; or the 2 bits in the Msg3 may indicate the fourth capability combination by "11", indicate the third capability combination by "10", indicate the second capability combination by "01", and indicate the first capability combination by "00", or the like.

In a possible implementation of embodiments of the present invention, the random access message may be the random access message A (MsgA) in two-step random access, and the indication information corresponding to the physical layer channel/signal processing capability of the terminal may be carried in the MsgA. For example, the physical layer channel/signal processing capability of the terminal may be indicated by a DMRS sequence of the PUSCH occupied by the MsgA, a DMRS pattern of the PUSCH, an indication bit in the PUSCH, and/or the CCCH carried by the PUSCH, and specific implementations can refer to the relevant descriptions in any embodiment of the present invention, which will not be elaborated here.

In a possible implementation of embodiments of the present invention, the random access message may be the Mag3 in four-step random access, and the indication information corresponding to the physical layer channel/signal processing capability of the terminal may be carried in the Msg3. The manner for carrying the indication information in the Msg3 is similar to that in the MsgA, and will not be described again here.

In this manner, the network device needs to use the relaxed processing capability to schedule the transmission of Msg3 for all the terminals in a cell. That is, a minimum time interval between a transmission end time point of Msg2 and a transmission start time point of Msg3 is determined according to a delay required by the terminal with the relaxed PDSCH processing capability and the relaxed PUSCH processing capability for the PDSCH processing capability and the PUSCH processing capability.

In the method for scheduling a terminal according to embodiments of the present invention, the terminal may send the random access message and/or the random access message feedback to the network device; the PUSCH occupied by the random access message corresponds to the physical layer channel/signal processing capability of the terminal, and/or the random access message carries the indication information corresponding to the physical layer channel/signal processing capability of the terminal; the PUCCH occupied by the random access message feedback corresponds to the physical layer channel/signal processing capability of the terminal, correspondingly, after receiving the random access message and/or the random access message feedback sent by the terminal, the network device can determine the physical layer channel/signal processing capability of the terminal according to the random access message and/or the random access message feedback, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 5, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 5, the method may include, but not limited to, a following step.

In step 501, a random access message is sent to a network device to indicate the physical layer channel/signal processing capability of the terminal; the random access message is sent via a PUSCH, the PUSCH carries a third CCCH, and an indication bit in the third CCCH is configured to indicate indication information corresponding to the physical layer channel/signal processing capability of the terminal; and the physical layer channel/signal processing capability of the terminal is: a relaxed processing capability, or an unrelaxed processing capability.

It should be noted that for the explanation of the random access message, reference may be made to the relevant description in any embodiment of the present invention, which will not be described again here.

In embodiments of the present invention, the PUSCH occupied by the random access message carries the third CCCH, the third CCCH has the indication bit, which is configured to indicate the physical layer channel/signal processing capability of the terminal, that is, the indication bit is the indication information corresponding to the physical layer channel/signal processing capability of the terminal.

As an example, the indication bit may be a reserved bit in the third CCCH, and the reserved bit may be used to indicate the physical layer channel/signal processing capability of the terminal. For example, assuming that the reserved bit has 1 bit, the relaxed processing capability may be indicated by a value of 0, and the unrelaxed processing capability may be indicated by a value of 1; or the relaxed processing capability may be indicated by a value of 1, and the unrelaxed processing capability may be indicated by a value of 0.

It should be noted that the above example where the indication bit has 1 bit is only used as an example for illustration, but the present invention is not limited thereto. For example, the indication bit may have 2 bits, the relaxed processing capability may be indicated by a value of 11, and the unrelaxed processing capability may be indicated by a value of 00; or the relaxed processing capability may be indicated by a value of 01, and the unrelaxed processing capability may be indicated by a value of 10, or the like, which are not limited by the present invention.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

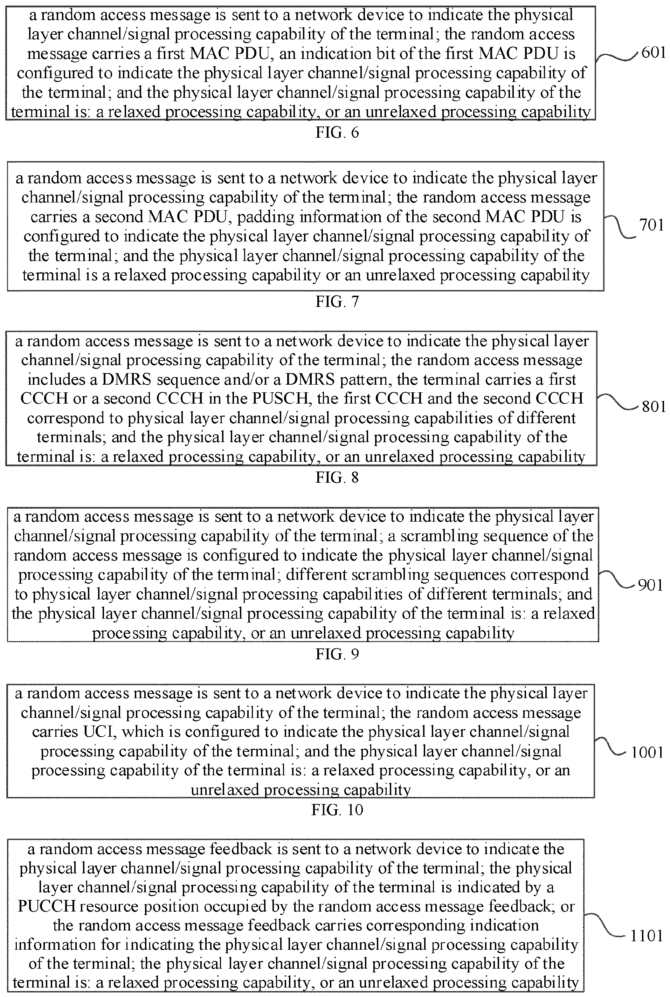

Referring to FIG. 6, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 6, the method may include, but not limited to, a following step.

In step 601, a random access message is sent to a network device to indicate the physical layer channel/signal processing capability of the terminal; the random access message carries a first MAC (media access control) PDU (protocol data unit), an indication bit of the first MAC PDU is configured to indicate the physical layer channel/signal processing capability of the terminal; and the physical layer channel/signal processing capability of the terminal is: a relaxed processing capability, or an unrelaxed processing capability.

The random access message is sent via a PUSCH, and the PUSCH carries the first MAC PDU.

It should be noted that for the explanation of the random access message, reference may be made to the relevant description in any embodiment of the present invention, which will not be described again here.

In embodiments of the present invention, the PUSCH occupied by the random access message carries the first MAC PDU, the first MAC PDU includes a MAC CE (control element), a new LCID is introduced to identify the MAC CE, and an indication bit is set in the MAC CE to indicate the physical layer channel/signal processing capability of the terminal.

That is, in the present invention, the PUSCH can not only carry the CCCH, but also carry the MAC CE, and new LCID may be introduced for the MAC CE, and the indication bit is set in the MAC CE to indicate the physical layer channel/signal processing capability of the terminal.

As an example, a new MAC CE may be introduced for the terminal whose physical layer channel/physical layer signal processing capability is the relaxed processing capability, and the terminal whose physical layer channel/physical layer signal processing capability is the unrelaxed processing capability may use an original MAC CE. The new MAC CE has a different LCID from that of the original MAC CE, that is, the new MAC CE may be identified with a new LCID.

As an example, the physical layer channel/signal processing capability of the terminal includes a PUSCH processing capability and/or a PDSCH processing capability. An indication bit may be set in the new MAC CE to indicate the PUSCH processing capability and/or the PDSCH processing capability of the terminal.

For example, capability combinations of the PUSCH processing capability and the PDSCH processing capability may include the following four combinations: a first capability combination where the PUSCH processing capability is the relaxed processing capability, and the PDSCH processing capability is the relaxed processing capability; a second capability combination where the PUSCH processing capability is the relaxed processing capability, and the PDSCH processing capability is the unrelaxed processing capability; a third capability combination where the PUSCH processing capability is the unrelaxed processing capability, and the PDSCH processing capability is the relaxed processing capability; a fourth capability combination where the PUSCH processing capability is the unrelaxed processing capability, and the PDSCH processing capability is the unrelaxed processing capability.

For an eRedcap UE with the relaxed processing capability, 2 bits may be set in the new MAC CE as the indication bit to indicate the first capability combination by "11", indicate the second capability combination by "10", indicate third capability combination by "01", and indicate the fourth capability combination by "00"; or the 2 bits set in the new MAC CE may indicate the fourth capability combination by "11", indicate the third capability combination by "10", indicate the second capability combination by "01", and indicate the first capability combination by "00", or the like.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 7, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 7, the method may include, but not limited to, a following step.

In step 701, a random access message is sent to a network device to indicate the physical layer channel/signal processing capability of the terminal; the random access message carries a second MAC PDU, padding information of the second MAC PDU is configured to indicate the physical layer channel/signal processing capability of the terminal; and the physical layer channel/signal processing capability of the terminal is a relaxed processing capability or an unrelaxed processing capability.

It should be noted that for the explanation of the random access message, reference may be made to the relevant description in any embodiment of the present invention, which will not be described again here.

In embodiments of the present invention, the PUSCH occupied by the random access message carries the second MAC PDU, at least one bit in the padding information of the second MAC PDU is configured to indicate the physical layer channel/signal processing capability of the terminal, that is, in the present invention, at least one bit in the padding information of the second MAC PDU is indication information corresponding to the physical layer channel/signal processing capability of the terminal.

As an example, for the MAC PDU sent by a higher layer to the physical layer, the physical layer can add an additional bit at the end of the MAC PDU to indicate the physical layer channel/signal processing capability of the terminal. For example, taking a case where 1 additional bit is add at the end of the MAC PDU to indicate the physical layer channel/signal processing capability of the terminal as an example for illustration, the 1 additional bit may indicate the relaxed processing capability by a value of 0, and indicate the unrelaxed processing capability by a value of 1; or the 1 additional bit may indicate the relaxed processing capability by a value of 1, and indicate the unrelaxed processing capability by a value of 0.

It should be noted that the above example where 1 additional bit is added at the end of the MAC PDU is only used as an example for illustration, but the present invention is not limited thereto. For example, 2 additional bits may be added as an example, the relaxed processing capability may be indicated by a value of 11, and the unrelaxed processing capability may be indicated by a value of 00; or the relaxed processing capability may be indicated by a value of 01, and the unrelaxed processing capability may be indicated by a value of 10, or the like, which are not limited by the present invention.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 8, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 8, the method may include, but not limited to, a following step.

In step 801, a random access message is sent to a network device to indicate the physical layer channel/signal processing capability of the terminal; the random access message includes a DMRS sequence and/or a DMRS pattern, the terminal carries a first CCCH or a second CCCH in the PUSCH, the first CCCH and the second CCCH correspond to physical layer channel/signal processing capabilities of different terminals; and the physical layer channel/signal processing capability of the terminal is: a relaxed processing capability, or an unrelaxed processing capability.

The PUSCH occupied by the random access message corresponds to the physical layer channel/signal processing capability of the terminal, and/or the random access message carries indication information corresponding to the physical layer channel/signal processing capability of the terminal; the DMRS sequence and/or the DMRS pattern of the PUSCH correspond to the physical layer channel/signal processing capability of the terminal.

It should be noted that for the explanation of the random access message, the first CCCH and the second CCCH, reference may be made to the relevant description in any embodiment of the present invention, which will not be described again here.

In embodiments of the present invention, the DMRS sequence and/or the DMRS pattern of the PUSCH occupied by the random access message is configured to indicate the physical layer channel/signal processing capability of the terminal, that is, in the present invention, the DMRS sequence and/or the DMRS pattern of the PUSCH corresponds to the physical layer channel/signal processing capability of the terminal.

As a possible implementation, when the physical layer channel/signal processing capability of the terminal is the relaxed processing capability, the DMRS sequence corresponds to at least one first scrambling code index, that is, in the present invention, when the DMRS sequence of the PUSCH occupied by the random access message corresponds to the first scrambling code index, the PUSCH corresponds to the physical layer channel/signal processing capability that is the relaxed processing capability.

As another possible implementation, when the physical layer channel/signal processing capability of the terminal is the unrelaxed processing capability, the DMRS sequence corresponds to at least one second scrambling code index, that is, in the present invention, when the DMRS sequence of the PUSCH occupied by the random access message corresponds to the second scrambling code index, the PUSCH corresponds to the physical layer channel/signal processing capability that is the unrelaxed processing capability.

The above-mentioned at least one first scrambling code index and the above-mentioned at least one second scrambling code index do not overlap.

As an example, when the random access message is the random access message A (MsgA) in two-step random access, there may exist two first scrambling code indexes and two second scrambling code indexes, for example, the first scrambling code indexes may be 2, 3, and the second scrambling code indexes may be 0, 1.

As another example, when the random access message is the Mag3 in four-step random access, there may exist one first scrambling code index and one second scrambling code index, for example, the first scrambling code index may be 1, and the second scrambling code index may be 0.

It should be noted that the above-mentioned first scrambling code index and second scrambling code index are described only as examples for explanation, and the present invention is not limited thereto. In actual application, it is only necessary to ensure that the first scrambling code index and the second scrambling code index do not overlap, the relaxed processing capability may be indicated by the non-overlapping first scrambling code index, and the unrelaxed processing capability may be indicated by the non-overlapping second scrambling code index.

As a possible implementation, when the physical layer channel/signal processing capability of the terminal is the relaxed processing capability, the DMRS pattern corresponds to a DMRS first time-frequency domain position, that is, in the present invention, when the DMRS pattern of the PUSCH occupied by the random access message corresponds to the first time-frequency domain position, the PUSCH corresponds to the physical layer channel/signal processing capability that is the relaxed processing capability.

As another possible implementation, when the physical layer channel/signal processing capability of the terminal is the unrelaxed processing capability, the DMRS pattern corresponds to a DMRS first scrambling sequence, that is, in the present invention, when the DMRS pattern of the PUSCH occupied by the random access message corresponds to the first scrambling sequence, the PUSCH corresponds to the physical layer channel/signal processing capability that is the unrelaxed processing capability.

There exists a difference between the first time-frequency domain position and the second time-frequency domain position.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 9, which is a schematic flowchart of another method for scheduling a terminal according to embodiments of the present invention, the method may be performed by the terminal in FIG. 1.

The method for scheduling a terminal may be performed alone, in combination with any embodiment or any possible implementation of any embodiment in the present invention, or in combination with any technical solution in the related art.

As shown in FIG. 9, the method may include, but not limited to, a following step.

In step 901, a random access message is sent to a network device to indicate the physical layer channel/signal processing capability of the terminal; a scrambling sequence of the random access message is configured to indicate the physical layer channel/signal processing capability of the terminal; different scrambling sequences correspond to physical layer channel/signal processing capabilities of different terminals; and the physical layer channel/signal processing capability of the terminal is: a relaxed processing capability, or an unrelaxed processing capability.

It should be noted that for the explanation of the random access message, reference may be made to the relevant description in any embodiment of the present invention, which will not be described again here.

In embodiments of the present invention, the scrambling sequence of the PUSCH occupied by the random access message corresponds to the physical layer channel/signal processing capability of the terminal.

As a possible implementation, when the physical layer channel/signal processing capability of the terminal is the relaxed processing capability, the scrambling sequence of the PUSCH is a first scrambling sequence, that is, in the present invention, the relaxed processing capability may be indicated by the first scrambling sequence.

As another possible implementation, when the physical layer channel/signal processing capability of the terminal is the unrelaxed processing capability, the scrambling sequence of the PUSCH is a second scrambling sequence, that is, in the present invention, the unrelaxed processing capability may be indicated by the second scrambling sequence.

A value range of the first scrambling sequence is different from a value range of the second scrambling sequence.

As an example, for the terminal whose physical layer channel/physical layer signal processing capability is the unrelaxed processing capability, an original scrambling sequence (referred to as the second scrambling sequence in the present invention) may be used; and for the terminal whose physical layer channel/physical layer signal processing capability is the relaxed processing capability, a new scrambling sequence (referred to as the first scrambling sequence in the present invention) may be used. For example, on the basis of the original scrambling sequence, $m^{th}$ power of 2 may be added to obtain the new scrambling sequence, where m is a positive integer, i.e., m=1,2,3,....

Taking the case where the random access message is the random access message A (MsgA) in the two-step random access as an example for explanation, the original scrambling sequence (i.e., the second scrambling sequence) $c_{init}$ may be determined by the following formula (3):

$$c_{init} = n_{RNTI} \cdot 2^{16} + n_{RAPID} \cdot 2^{10} + n_{ID} \; ; (3)$$

where $n_{RNTI}$ refers to RA-RNTI; $n_{RAPID}$ refers to a preamble sequence index; $n_{ID}$ is used for interference randomization between cells, $n_{ID}$ may be configured by the network device, and its value is in the range of (0, 65535), if the network device does not configure the $n_{ID}$, $n_{ID}$ is a cell ID.

After the second scrambling sequence is determined according to the formula (3), $m^{th}$ power of 2 may be added to the second scrambling sequence to obtain the first scrambling sequence. The value range of the first scrambling sequence is different from that of the second scrambling sequence. Taking m=32 as an example, the value range of the second scrambling sequence is $0\sim2^{32}$, and the value range of the first scrambling sequence is $2^{32}\sim2^{33}$.

When the network device performs decoding, it can use the two different scrambling sequences for descrambling to determine the specific scrambling sequence according to a descrambling result, and then determine the processing capability of the terminal according to the determined scrambling sequence.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

Referring to FIG. 10, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 10, the method may include, but not limited to, a following step.

In step 1001, a random access message is sent to a network device to indicate the physical layer channel/signal processing capability of the terminal; the random access message carries UCI (uplink control information), which is configured to indicate the physical layer channel/signal processing capability of the terminal; and the physical layer channel/signal processing capability of the terminal is: a relaxed processing capability, or an unrelaxed processing capability.

The random access message is sent via a PUSCH, and the UCI carried by the PUSCH corresponds to the physical layer channel/signal processing capability of the terminal.

It should be noted that for the explanation of the random access message, reference may be made to the relevant description in any embodiment of the present invention, which will not be described again here.

In embodiments of the present invention, the PUSCH occupied by the random access message can carry the UCI, and the UCI is configured to indicate the physical layer channel/signal processing capability of the terminal, that is, in the present invention, the physical layer channel/signal processing capability of the terminal may be indicated by the UCI carried by the PUSCH.

In any embodiment of the present invention, the random access message is the random access message A in two-step random access.

In any embodiment of the present invention, the random access message is the Mag3 in four-step random access.

In the method for scheduling a terminal according to embodiments of the present invention, the terminal may send the random access message to the network device; the PUSCH occupied by the random access message corresponds to the physical layer channel/signal processing capability of the terminal, and/or the random access message carries the indication information corresponding to the physical layer channel/signal processing capability of the terminal, correspondingly, after receiving the random access message sent by the terminal, the network device can determine the physical layer channel/signal processing capability of the terminal according to the random access message, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

In any embodiment of the present invention, explanation is made with reference to an example where the physical layer channel/signal processing capability of the terminal is the relaxed processing capability, and the random access message is the random access message A (MsgA) in the two-step random access, the terminal may be an eRedcap UE, the eRedcap UE can report the PDSCH processing capability and/or the PUSCH preparation capabilities via the MsgA PUSCH, and the network device can reasonably allocate K1/K2 values to the terminal according to the reported information.

As an example, a separate (or new) PO resource may be configured for the eRedcap UE, and the eRedcap UE can use the separate PO resource to perform the transmission of the MsgA PUSCH. It is not necessary to configure a separate MsgA PRACH resource for the eRedcap UE, and the preamble sequence in the original PRACH slot is not only associated with the original PO resource configured for the legacy terminal (i.e., a terminal whose physical layer channel/signal processing capability is the unrelaxed processing capability), but also needs to be mapped with the new PO resource configured for the eRedcap UE.

As an example, a new CCCH may be introduced for the eRedcap UE, and the eRedcap UE can use the new CCCH to indicate its own physical layer channel/signal processing capability (i.e., the relaxed processing capability). The new CCCH is distinguished by using a new LCID.

As an example, the eRedcap UE can use the original CCCH indication bit (such as 1 shared bit) to indicate its own physical layer channel/signal processing capability.

As an example, a new MAC CE may be introduced for the eRedcap UE, and the eRedcap UE can use the new MAC CE to indicate its own physical layer channel/signal processing capability (i.e., the relaxed processing capability).

That is, for the eRedcap UE, the initial access Msg3 not only carries the CCCH, but may also carry the MAC CE. The new MAC CE is identified by a new LCID.

As an example, for the MAC PDU sent by the higher layer to the physical layer, the physical layer can add an additional bit at the end of the MAC PDU to indicate the physical layer channel/signal processing capability of the terminal.

As an example, a new DMRS sequence and/or a new DMRS pattern may be introduced for the eRedcap UE, and the eRedcap UE can use the new DMRS sequence and/or new DMRS pattern to indicate its own physical layer channel/signal processing capability (i.e., the relaxed processing capability).

For example, when the random access message is the random access message A (MsgA) in two-step random access, a scrambling code index corresponding to the new DMRS sequence introduced for the eRedcap UE may be: DMRS scrambling ID#2/#3.

As an example, different scrambling sequences may be used to scramble a codeword. For example, the original scrambling sequence (referred to as the second scrambling sequence in the present invention) may be generated according to original RO (RACH occasion, random access channel occasion) time domain position and RA-RNTI (random access radio network temporary identity), the original scrambling sequence may be extended, the terminal (i.e., the eRedcap UE) whose physical layer channel/signal processing capability is the relaxed processing capability can use the extended scrambling sequence (referred to as the first scrambling sequence in the present invention), and the terminal whose physical layer channel/signal processing capability is the unrelaxed processing capability can use the original scrambling sequence.

An extension rule of the scrambling sequence may be for example multiplying $m^{th}$ power of 2 on the basis of the original scrambling sequence, where m is a positive integer.

As an example, an embedded UCI may be introduced for the eRedcap UE, and the eRedcap UE can indicate its own physical layer channel/signal processing capability (i.e., the relaxed processing capability) by the embedded UCI.

In summary, the network device can learn the physical layer channel/signal processing capability of the terminal, so that the network device can, according to the physical layer channel/signal processing capability of the terminal, reasonably schedule signaling interactions for the two-step random access or the four-step random access as well as for the subsequent connection setup with the CN (core network) side.

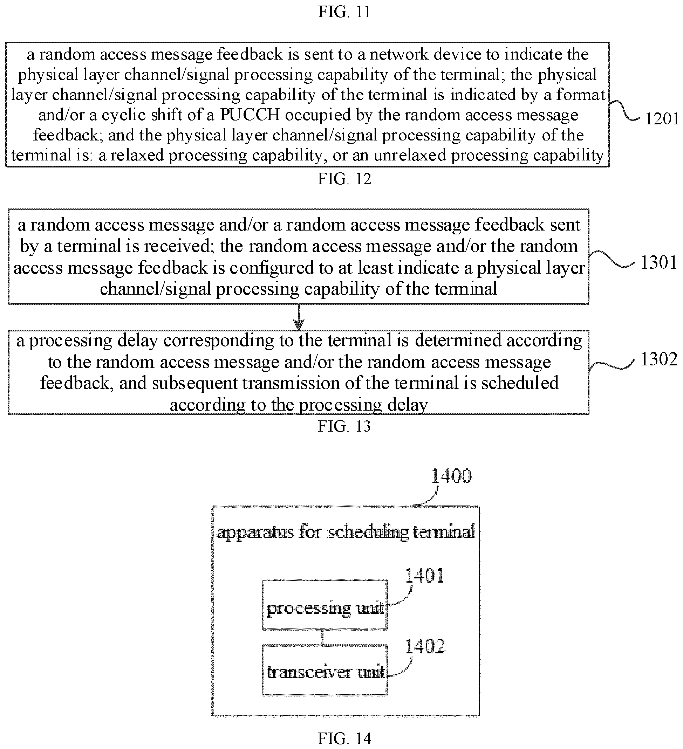

Referring to FIG. 11, which is a schematic flowchart of another method for scheduling a terminal according to embodiments of the present invention, the method may be performed by the terminal in FIG. 1.

The method for scheduling a terminal may be performed alone, in combination with any embodiment or any possible implementation of any embodiment in the present invention, or in combination with any technical solution in the related art.

As shown in FIG. 11, the method may include, but not limited to, a following step.

In step 1101, a random access message feedback is sent to a network device to indicate the physical layer channel/signal processing capability of the terminal. The physical layer channel/signal processing capability of the terminal is indicated by a PUCCH resource position occupied by the random access message feedback; or the random access message feedback carries corresponding indication information for indicating the physical layer channel/signal processing capability of the terminal.

The physical layer channel/signal processing capability of the terminal is: a relaxed processing capability, or an unrelaxed processing capability.

In some possible implementations, the physical layer channel/signal processing capability of the terminal may be indicated by the PUCCH time domain resource position occupied by the random access message feedback.

It should be noted that for the explanation of the random access message feedback, reference may be made to the relevant description in any embodiment of the present invention, which will not be described again here.

In embodiments of the present invention, the time domain position occupied by the PUCCH occupied by the random access message feedback corresponds to the physical layer channel/signal processing capability of the terminal. That is, in the present invention, the physical layer channel/signal processing capability of the terminal may be indicated by the time domain position occupied by the PUCCH.

As a possible implementation, the terminal may receive first indication information sent by the network device, and determine a PUCCH time domain position corresponding to the relaxed processing capability and a PUCCH time domain position corresponding to the unrelaxed processing capability according to the first indication information.

For example, the first indication information may be used to indicate the time domain position (or called the time domain resource position) corresponding to the relaxed processing capability, and the first indication information may also be used to indicate the time domain position corresponding to the unrelaxed processing capability.

In this manner, the terminal can determine the PUCCH time domain resource associated therewith according to its own processing capability, and perform the transmission of the random access message feedback according to the PUCCH time domain resource. The network device can attempt the PUCCH reception at two candidate time domain resource positions (i.e., the PUCCH time domain resource position associated with the relaxed processing capability and the PUCCH time domain resource position associated with the unrelaxed processing capability) at the same time, and determine the processing capability of the terminal according to a specific time domain resource position at which the PUCCH is received.

The PUCCH time domain resource position associated with the unrelaxed processing capability is located before the PUCCH time domain resource position associated with the relaxed processing capability.

As another possible implementation, the terminal may receive second indication information sent by the network device, and determine the PUCCH time domain position corresponding to the relaxed processing capability according to the second indication information, or determine the PUCCH time domain position corresponding to the unrelaxed processing capability according to the second indication information.

For example, the second indication information may be used to indicate a candidate time domain position corresponding to the relaxed processing capability, or the second indication information may be used to indicate a candidate time domain position corresponding to the unrelaxed processing capability. There exists an association relationship between the candidate time domain position corresponding to the relaxed processing capability and the candidate time domain position corresponding to the unrelaxed processing capability.

As an example, when the second indication information is configured to indicate the candidate time domain position corresponding to the relaxed processing capability, the above association relationship can be queried according to the candidate time domain position corresponding to the relaxed processing capability to determine the candidate time domain position corresponding to the unrelaxed processing capability.

As an example, when the second indication information is configured to indicate the candidate time domain position corresponding to the unrelaxed processing capability, the above association relationship can be queried according to the candidate time domain position corresponding to the unrelaxed processing capability to determine the candidate time domain position corresponding to the relaxed processing capability.

In the method for scheduling a terminal according to embodiments of the present invention, the terminal may send the random access message feedback to the network device; the PUCCH occupied by the random access message feedback corresponds to the physical layer channel/signal processing capability of the terminal, correspondingly, after receiving the random access message feedback sent by the terminal, the network device can determine the physical layer channel/signal processing capability of the terminal according to the random access message feedback, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

In any embodiment of the present invention, in an example where the terminal whose physical layer channel/-signal processing capability is the relaxed processing capability is the eRedCap UE, and the terminal whose physical layer channel/signal processing capability is the unrelaxed processing capability is the RedCap UE, the eRedcap UE and the Redcap UE can perform the ACK feedback according to different PUCCH time domain positions. The network device can try to perform blind detection on different PUCCHs, and a time domain position at which the successful detection is performed by the network device corresponds to the processing capability of the corresponding terminal. The network device can schedule the subsequent data, such as the connection interaction signaling with the CN side, according to the implicit indication information.

As an example, the network device may directly indicate two PUCCH candidate time domain positions, and each candidate time domain position corresponds to the processing capability of a kind of terminal. That is, the candidate time domain position corresponding to the relaxed processing capability and the candidate time domain position corresponding to the unrelaxed processing capability can be configured at the same time through first configuration information.

As an example, there exists an association relationship between the candidate time domain position corresponding to the relaxed processing capability (hereinafter referred to as a second candidate time domain position) and the candidate time domain position corresponding to the unrelaxed processing capability (hereinafter referred to as a first candidate time domain position), for example, the second candidate time domain position = n * the first candidate time domain position, or the second candidate time domain position = the first time domain position + delta, where the value of n or delta may be specified by a protocol, or may be configured by the network device via a semi-static signaling (such as RMSI (remaining minimum system information) signaling).

The frequency domain resource where the second candidate time domain position is located may be separately configured/indicated, or may also use the frequency domain resource of the first candidate time domain position. The network device may indicate the first candidate time domain position according to the processing capability of the normal terminal; at the same time, the eRedCap UE can implicitly determine the second candidate time domain position according to the first candidate time domain position indicated by the network device.

That is, in the present invention, the network device can perform detection at each candidate time domain position of the PUCCH to receive the random access message feedback, and schedule the subsequent transmission of the terminal according to the processing delay corresponding to the random access message feedback. For example, when the network device receives the random access message feedback at the second candidate time domain position, the network device can determine that the physical layer channel/signal processing capability of the terminal is the relaxed processing capability, and schedule the subsequent transmission of the terminal according to the processing delay corresponding to the relaxed processing capability; when the network device receives the random access message feedback at the first candidate time domain position, the network device can determine that the physical layer channel/signal processing capability of the terminal is the unrelaxed processing capability, and schedule the subsequent transmission of the terminal according to the processing delay corresponding to the unrelaxed processing capability.

In summary, the network device can determine the physical layer channel/signal processing capability of the terminal according to the time domain position occupied by the PUCCH, so that the network device can use the reasonable scheduling delay to schedule the eRedCap UE with the relaxed processing capability in signaling interaction between the network device and the terminal in the subsequent connection setup with the CN side.

Referring to FIG. 12, which is a schematic flowchart of another method for scheduling a terminal according to embodiments of the present invention, the method may be performed by the terminal in FIG. 1. The method for scheduling a terminal may be performed alone, in combination with any embodiment or any possible implementation of any embodiment in the present invention, or in combination with any technical solution in the related art.

As shown in FIG. 12, the method may include, but not limited to, a following step.

In step 1201, a random access message feedback is sent to a network device to indicate the physical layer channel/signal processing capability of the terminal. The physical layer channel/signal processing capability of the terminal is indicated by a format and/or a cyclic shift of a PUCCH occupied by the random access message feedback; and the physical layer channel/signal processing capability of the terminal is: a relaxed processing capability, or an unrelaxed processing capability.

In some possible implementations, the physical layer channel/signal processing capability of the terminal may be indicated by a PUCCH time domain resource position occupied by the random access message feedback.

It should be noted that for the explanation of the random access message feedback, reference may be made to the relevant description in any embodiment of the present invention, which will not be described again here.

In embodiments of the present invention, the terminal with the relaxed processing capability and the terminal with the unrelaxed processing capability can use the same PUCCH time domain resource position. The network device may schedule the random access message feedback for all terminals in a cell according to the processing delay of the terminal with the relaxed processing capability.

In a possible implementation of embodiments of the present invention, the format of the PUCCH occupied by the random access message feedback corresponds to the physical layer channel/signal processing capability of the terminal.

As an example, terminals with different processing capabilities may use different PUCCH formats for PUCCH transmission. Terminals with different processing capabilities mean that the terminals have different capabilities in processing the physical layer channel, or the terminals have different capabilities in processing the physical layer signal.

In another possible implementation of embodiments of the present invention, a cyclic shift adopted by the feedback message corresponding to the random access message corresponds to the physical layer channel/signal processing capability of the terminal. The processing capability of the terminal is indicated by different PUCCH cyclic shifts. For example, the terminal with the unrelaxed processing capability uses a first cyclic shift to feed back the random access message feedback (ACK) to the network device, the terminal with the relaxed processing capability use a second cyclic shift to feed back the random access message feedback (ACK) to the network device, and the network device can determine the physical layer channel/signal processing capability of the terminal according to different PUCCH cyclic shifts.

As an example, terminals with different processing capabilities may use different cyclic shifts for PUCCH transmission.

In another possible implementation of embodiments of the present invention, a time-frequency domain resource of the PUCCH occupied by the random access message feedback corresponds to the physical layer channel/signal processing capability of the terminal.

As an example, terminals with different processing capabilities may use different time-frequency domain resources for PUCCH transmission. For example, terminals with different processing capabilities may perform PUCCH transmissions at different symbol/frequency domain positions.

It should be noted that the various possible implementations mentioned above may be performed alone or in combination, which is not limited in present invention.

In the method for scheduling a terminal according to embodiments of the present invention, the terminal may send the random access message feedback to the network device; the PUCCH occupied by the random access message feedback corresponds to the physical layer channel/signal processing capability of the terminal, correspondingly, after receiving the random access message feedback sent by the terminal, the network device can determine the physical layer channel/signal processing capability of the terminal according to the random access message feedback, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

In any embodiment of the present invention, explanation is made with reference to an example where the random access message is the random access message A (MsgA) in two-step random access, all terminals may use the same time domain position to report the ACK, and the network device uses the processing delay corresponding to the terminal with the relaxed processing capability to schedule the HARQ-ACK feedback of the MsgB for all terminals.

That is, in the present invention, the network device may receive the random access message feedback transmitted on the PUCCH according to the processing delay corresponding to the relaxed processing capability.

As an example, the format of the PUCCH may not be changed, but different cyclic shifts may be used to report the processing capability. In this way, the network device can determine whether the terminal is a terminal with the relaxed processing delay or a terminal with the unrelaxed processing delay according to the different cyclic shift of the received PUCCH.

For terminals with different processing capabilities, the PUCCH transmission may be performed by using different PUCCH cyclic shifts. That is, for the terminal with the relaxed processing delay, the ACK feedback and the processing capability reporting indication are transmitted on the same PUCCH.

As an example, the network device may respectively configure different PUCCH common resource configuration indexes via an RRC (radio resource control) signaling or an RMSI signaling, and the above different resources are respectively targeted to terminals with different processing capabilities.

This manner requires that the terminal may perform blind detection for different PUCCH formats and/or at different symbols/frequency domain positions. At the same time, terminals with different processing capabilities may perform the PUCCH transmission by using different PUCCH formats and/or at different symbols/frequency domain positions and/or using different cyclic shifts.

In summary, compared with embodiments corresponding to FIG. 11, embodiments corresponding to FIG. 12 can reduce the reservation of PUCCH candidate resources and reduce the unnecessary waste of spectrum resources.

Referring to FIG. 13, which is a schematic flowchart of another method for scheduling a terminal according to embodiments of the present invention, the method is performed by a network device. Those skilled in the art can understand that the method performed by the network device may correspond to the method performed by the terminal, so the same expressions as those in the method performed by the terminal will not be repeated in the method performed by the network device.

The method for scheduling a terminal may be performed alone, in combination with any embodiment or any possible implementation of any embodiment in the present invention, or in combination with any technical solution in the related art.

As shown in FIG. 13, the method may include, but not limited to, the following steps.

In step 1301, a random access message and/or a random access message feedback sent by a terminal is received, the random access message and/or the random access message feedback is configured to at least indicate a physical layer channel/signal processing capability of the terminal; and the physical layer channel/signal processing capability of the terminal is: a relaxed processing capability, or an unrelaxed processing capability.

The terminal may indicate the physical layer channel/signal processing capability of the terminal through any one or more of the following manners:

the random access message carries corresponding indication information for indicating the physical layer channel/-signal processing capability of the terminal;

the random access message feedback carries corresponding indication information for indicating the physical layer channel/signal processing capability of the terminal;

the PO configured in the PUSCH occupied by the random access message indicates the physical layer channel/signal processing capability of the terminal; and physical layer channel/signal processing capabilities of different terminals correspond to different PO resources;

the random access message is sent through the PUSCH, the PUSCH carries the first CCCH or the second CCCH, and the first CCCH and the second CCCH correspond to physical layer channel/signal processing capabilities of different terminals;

the random access message is sent through the PUSCH, the PUSCH carries the third CCCH, and the indication bit in the third CCCH is configured to indicate the indication information corresponding to the physical layer channel/signal processing capability of the terminal;

the random access message carries the first MAC PDU, and the indication bit in the first MAC PDU is configured to indicate the physical layer channel/signal processing capability of the terminal;

the random access message carries the second MAC PDU, and the padding information of the second MAC PDU is configured to indicate the physical layer channel/signal processing capability of the terminal;

the random access message includes the DMRS sequence and/or the DMRS pattern, the terminal carries the first CCCH or the second CCCH in the PUSCH, and the first CCCH and the second CCCH correspond to physical layer channel/signal processing capabilities of different terminals;

the scrambling sequence of the random access message is configured to indicate the physical layer channel/signal processing capability of the terminal; different scrambling sequences correspond to the physical layer channel/signal processing capabilities of different terminals;

the random access message carries the UCI, which is configured to indicate the physical layer channel/signal processing capability of the terminal;

the physical layer channel/signal processing capability of the terminal is indicated by the PUCCH resource position occupied by the random access message feedback;

the physical layer channel/signal processing capability of the terminal is indicated by the format and/or the cyclic shift of the PUCCH occupied by the random access message feedback.

In a possible implementation of embodiments of the present invention, the network device configures separate PUSCH resources for terminals with different processing capabilities via separate PUSCH configuration signaling, that is, the PUSCH resource carrying the random access message corresponds to the physical layer channel/physical layer signal processing capability of the terminal.

In a possible implementation of embodiments of the present invention, in response to the physical layer channel/signal processing capability of the terminal being the relaxed processing capability, the uplink shared channel occasion (PO) resource configured in the PUSCH is the first PO resource; in response to the physical layer channel/signal processing capability of the terminal being the unrelaxed processing capability, the PO resource configured in the PUSCH is the second PO resource; and the first PO resource is a different PO resource from the second PO resource.

In a possible implementation of embodiments of the present invention, both the first PO resource and the second PO resource have a mapping relationship with the preamble sequence of the random access channel PRACH occupied by the random access message.

In a possible implementation of embodiments of the present invention, in response to the physical layer channel/signal processing capability of the terminal being the relaxed processing capability, the PUSCH carries the first CCCH; in response to the physical layer channel/signal processing capability of the terminal is the unrelaxed processing capability, the PUSCH carries the second CCCH; the first CCCH has a different LCID from that of the second CCCH, and the terminal indicates the physical layer channel/signal processing capability of the terminal by sending the first CCCH or the second CCCH.

In a possible implementation of embodiments of the present invention, the PUSCH carries the third CCCH; the third CCCH has an indication bit, and the indication bit carries indication information corresponding to the physical layer channel/signal processing capability of the terminal.

In a possible implementation of embodiments of the present invention, the PUSCH carries the first MAC PDU; the first MAC PDU includes the MAC CE, the MAC CE is identified by a new LCID, and the indication bit is set in the first MAC CE to indicate the physical layer channel/signal processing capability of the terminal.

In a possible implementation of embodiments of the present invention, the PUSCH carries the second MAC PDU; at least one bit in the padding information of the second MAC PDU is the indication information corresponding to the physical layer channel/signal processing capability of the terminal.

In a possible implementation of embodiments of the present invention, the demodulation reference signal (DMRS) sequence and/or the DMRS pattern of the PUSCH corresponds to the physical layer channel/signal processing capability of the terminal.

In a possible implementation of embodiments of the present invention, in response to the physical layer channel/signal processing capability of the terminal being the relaxed processing capability, the DMRS sequence corresponds to at least one first scrambling code index; in response to the physical layer channel/signal processing capability of the terminal is the unrelaxed processing capability, the DMRS sequence corresponds to at least one second scrambling code index; and the at least one first scrambling code index and the at least one second scrambling code index do not overlap.

In a possible implementation of embodiments of the present invention, in response to the physical layer channel/signal processing capability of the terminal being the relaxed processing capability, the DMRS pattern indicates the first time-frequency domain position; in response to the physical layer channel/signal processing capability of the terminal being the unrelaxed processing capability, the DMRS pattern indicates the second time-frequency domain position; and there exists a difference between the first time-frequency domain position and the second time-frequency domain position.

In a possible implementation of embodiments of the present invention, the scrambling sequence of the PUSCH corresponds to the physical layer channel/signal processing capability of the terminal.

In a possible implementation of embodiments of the present invention, in response to the physical layer channel/signal processing capability of the terminal being the relaxed processing capability, the scrambling sequence of the PUSCH is the first scrambling sequence; in response to the physical layer channel/signal processing capability of the terminal being the unrelaxed processing capability, and the scrambling sequence of the PUSCH is the second scrambling sequence; and the value range of the first scrambling sequence is different from the value range of the second scrambling sequence.

In a possible implementation of embodiments of the present invention, the uplink control information carried by the PUSCH is configured to indicate the physical layer channel/signal processing capability of the terminal.

In a possible implementation of embodiments of the present invention, the random access message is the random access message A in the two-step random access.

In a possible implementation of embodiments of the present invention, the random access message is the Mag3 in the four-step random access.

In a possible implementation of embodiments of the present invention, the time domain position occupied by the PUCCH corresponds to the physical layer channel/signal processing capability of the terminal; and the network device can perform detection at each candidate time domain position of the PUCCH to receive the random access message feedback.

In a possible implementation of embodiments of the present invention, the network device may also send the first indication information to the terminal; the first indication information is configured to indicate the time domain position corresponding to the relaxed processing capability, and the first indication information is configured to indicate the time domain position corresponding to the unrelaxed processing capability.

In a possible implementation of embodiments of the present invention, the network device may also send the second indication information to the terminal; the second indication information is configured to indicate the candidate time domain position corresponding to the relaxed processing capability, or the second indication information is configured to indicate the candidate time domain position corresponding to the unrelaxed processing capability; and there exists an association relationship between the candidate time domain position corresponding to the relaxed processing capability and the candidate time domain position corresponding to the unrelaxed processing capability.

In a possible implementation of embodiments of the present invention, the network device can receive the random access message feedback transmitted on the PUCCH according to the processing delay corresponding to the relaxed processing capability; the format of the PUCCH corresponds to the physical layer channel/signal processing capability of the terminal; and/or the cyclic shift adopted by the PUCCH corresponds to the physical layer channel/signal processing capability of the terminal; and/or the time-frequency domain resource of the PUCCH corresponds to the physical layer channel/signal processing capability of the terminal.

It should be noted that the explanations of the method for scheduling a terminal performed by the terminal as described in any of the foregoing embodiments are also applicable to the method for scheduling a terminal performed by the network device, with the similar implementation principles, which will not be described here again.

In step 1302, the processing delay corresponding to the terminal is determined according to the random access message and/or the random access message feedback, and subsequent transmission of the terminal is scheduled according to the processing delay.

In embodiments of the present invention, the network device may schedule the subsequent transmission of the terminal according to the processing delay corresponding to the random access message and/or the processing delay corresponding to the access message feedback. As a result, for terminals with different processing capabilities, the network device can allocate different resources for their subsequent transmissions, so that terminals can schedule reasonably allocated resources for transmissions, thereby avoiding resource rescheduling caused by failed transmission, avoiding waste of resources, and improving resource utilization.

In the method for scheduling a terminal according to embodiments of the present invention, the network device can receive the random access message and/or the random access message feedback sent by the terminal, and schedule the subsequent transmission of the terminal according to the processing delay corresponding to the random access message and/or the random access message feedback; the physical uplink shared channel (PUSCH) occupied by the random access message corresponds to the physical layer channel/signal processing capability of the terminal, and/or the random access message carries the indication information corresponding to the physical layer channel/signal processing capability of the terminal; the physical uplink control channel (PUCCH) occupied by the random access message feedback corresponds to the physical layer channel/signal processing capability of the terminal. In this way, the network device can determine the physical layer channel/signal processing capability of the terminal according to the random access message and/or the random access message feedback, that is, the network device determines whether the processing capability of the terminal is the relaxed processing capability or the unrelaxed processing capability, so that the network device can purposively schedule the subsequent transmission of the terminal according to the processing capability of the terminal. In this way, on the one hand, there is no need to use an additional PRACH resource to indicate and determine the physical layer channel/signal processing capability of the terminal, which not only saves the PRACH resource, but also avoids the PRACH resource selection conflict and thus avoids the reduction in success rate of random access and the increase in the random access delay caused by the PRACH resource selection conflict; on the other hand, for terminals with different processing capabilities, different resources may be allocated for their subsequent transmissions, so that terminals can transmit messages via reasonably allocated resources, thereby avoiding resource rescheduling caused by failed message transmission, avoiding waste of resources, and improving resource utilization.

It should be noted that these possible implementations described above may be performed alone or in combination, which is not limited by embodiments of the present invention.

In the above embodiments provided in the present invention, the methods according to embodiments of the present invention are introduced from perspectives of the network device and the terminal, respectively. In order to implement the various functions in the methods according to the above embodiments of the present invention, the terminal and the network device each may include a hardware structure and a software module, and implement the above various functions in a form of the hardware structure, the software module, or the hardware structure in combination with the software module. A certain function among the above mentioned various functions may be implemented in the manner of the hardware structure, the software module, or the hardware structure in combination with the software module.

Referring to FIG. 14, which is a schematic flowchart of an apparatus 140 for scheduling a terminal according to embodiments of the present invention, the apparatus may include a processing unit 1401 and a transceiver unit 1402. The transceiver unit 1402 may include a sending unit and/or a receiving unit, the sending unit is used to implement the sending function, the receiving unit is used to implement the receiving function, and the transceiver unit may implement the sending function and/or the receiving function.

The apparatus 140 for scheduling a terminal may be a communication device (such as a terminal or a network device), an apparatus in the communication device, or an apparatus that can be used in conjunction with the communication device.

When the apparatus 140 for scheduling a terminal is a terminal:

The transceiver unit is configured to send a message to a network device. The message is a random access message; a physical uplink shared channel (PUSCH) occupied by the random access message corresponds to a physical layer channel/signal processing capability of the terminal, or the random access message carries indication information corresponding to the physical layer channel/signal processing capability of the terminal; or the message is a random access message feedback; and a PUCCH occupied by the random access message feedback corresponds to the physical layer channel/signal processing capability of the terminal.

In an implementation, an uplink shared channel occasion (PO) resource configured in the PUSCH corresponds to the physical layer channel/signal processing capability of the terminal.

In an implementation, in response to the physical layer channel/signal processing capability of the terminal being a relaxed processing capability, the uplink shared channel occasion (PO) resource configured in the PUSCH is a first PO resource; in response to the physical layer channel/signal processing capability of the terminal being an unrelaxed processing capability, the PO resource configured in the PUSCH is a second PO resource; and the first PO resource is a different PO resource from the second PO resource.

In an implementation, the first PO resource and the second PO resource both have a mapping relationship with a preamble sequence of a random access channel (PRACH).

In an implementation, in response to the physical layer channel/signal processing capability of the terminal being a relaxed processing capability, the PUSCH carries a first CCCH; in response to the physical layer channel/signal processing capability of the terminal being an unrelaxed processing capability, the PUSCH carries a second CCCH; the first CCCH has a different logical channel identifier (LCID) from that of the second CCCH, and the terminal indicates the physical layer channel/signal processing capability of the terminal by sending the first CCCH or the second CCCH.

In an implementation, the PUSCH carries a third CCCH; the third CCCH has an indication bit, and the indication bit is indication information corresponding to the physical layer channel/signal processing capability of the terminal.

In an implementation, the PUSCH carries a first MAC PDU; the first MAC PDU includes a MAC CE, and an LCID of the MAC CE is indication information corresponding to the physical layer channel/signal processing capability of the terminal.

In an implementation, the PUSCH carries a second MAC PDU; at least one bit of padding information of the second MAC PDU is indication information corresponding to the physical layer channel/signal processing capability of the terminal.

In an implementation, a DMRS sequence and/or a DMRS pattern of the PUSCH corresponds to the physical layer channel/signal processing capability of the terminal.

In an implementation, in response to the physical layer channel/signal processing capability of the terminal being a relaxed processing capability, the DMRS sequence corresponds to at least one first scrambling code index; in response to the physical layer channel/signal processing capability of the terminal being an unrelaxed processing capability, the DMRS sequence corresponds to at least one second scrambling code index; and the at least one first scrambling code index and the at least one second scrambling code index do not overlap.

In an implementation, in response to the physical layer channel/signal processing capability of the terminal being a relaxed processing capability, the DMRS pattern corresponds to a DMRS first time-frequency domain position; in response to the physical layer channel/signal processing capability of the terminal being an unrelaxed processing capability, the DMRS pattern corresponds to a second time-frequency domain position; and there exists a difference between the first time-frequency domain position and the second time-frequency domain position.

In an implementation, a scrambling sequence of the PUSCH corresponds to the physical layer channel/signal processing capability of the terminal.

In an implementation, in response to the physical layer channel/signal processing capability of the terminal being a relaxed processing capability, the scrambling sequence of the PUSCH is a first scrambling sequence; in response to the physical layer channel/signal processing capability of the terminal being an unrelaxed processing capability, the scrambling sequence of the PUSCH is a second scrambling sequence; and a value range of the first scrambling sequence is different from a value range of the second scrambling sequence.

In an implementation, uplink control information carried by the PUSCH corresponds to the physical layer channel/signal processing capability of the terminal.

In an implementation, the random access message is a random access message A in two-step random access.

In an implementation, the random access message is a Mag3 in four-step random access.

In an implementation, a time domain position occupied by the PUCCH corresponds to the physical layer channel/signal processing capability of the terminal.

In an implementation, the transceiver unit 1402 is further configured to: receive first indication information sent by the network device; the first indication information is configured to indicate a candidate time domain position corresponding to a relaxed processing capability, and the first indication information is configured to indicate a candidate time domain position corresponding to an unrelaxed processing capability.

In an implementation, the transceiver unit 1402 is further configured to: receive second indication information sent by the network device; the second indication information is configured to indicate a candidate time domain position corresponding to a relaxed processing capability, or the second indication information is configured to indicate a candidate time domain position corresponding to an unrelaxed processing capability; there exists an association relationship between the candidate time domain position corresponding to the relaxed processing capability and the candidate time domain position corresponding to the unrelaxed processing capability.

In an implementation, a format of the PUCCH corresponds to the physical layer channel/signal processing capability of the terminal; and/or a cyclic shift adopted by the PUCCH corresponds to the physical layer channel/signal processing capability of the terminal; and/or a time-frequency domain resource of the PUCCH corresponds to the physical layer channel/signal processing capability of the terminal.

When the apparatus 140 for scheduling a terminal is a network device:

The transceiver unit 1402 is configured to receive a message sent by a terminal.

The processing unit 1401 is configured to schedule a subsequent transmission of the terminal according to a processing delay corresponding to the message.

The message is a random access message; a PUSCH occupied by the random access message corresponds to a physical layer channel/signal processing capability of the terminal, or the random access message carries indication information corresponding to the physical layer channel/signal processing capability of the terminal; or the message is a random access message feedback; and the random access message carries indication information corresponding to the physical layer channel/signal processing capability of the terminal.

In an implementation, an uplink shared channel occasion (PO) resource configured in the PUSCH corresponds to the physical layer channel/signal processing capability of the terminal.

In an implementation, in response to the physical layer channel/signal processing capability of the terminal being a relaxed processing capability, the uplink shared channel occasion (PO) resource configured in the PUSCH is a first PO resource; in response to the physical layer channel/signal processing capability of the terminal being an unrelaxed processing capability, the PO resource configured in the PUSCH is a second PO resource; and the first PO resource is a different PO resource from the second PO resource.

In an implementation, the first PO resource and the second PO resource both have a mapping relationship with a preamble sequence of a random access channel (PRACH) occupied by the random access message.

In an implementation, in response to the physical layer channel/signal processing capability of the terminal being a relaxed processing capability, the PUSCH carries a first CCCH; in response to the physical layer channel/signal processing capability of the terminal being an unrelaxed processing capability, the PUSCH carries a second CCCH; the first CCCH has a different logical channel identifier (LCID) from that of the second CCCH, and the terminal indicates the physical layer channel/signal processing capability of the terminal by sending the first CCCH or the second CCCH.

In an implementation, the PUSCH carries a third CCCH; the third CCCH has an indication bit, and the indication bit is indication information corresponding to the physical layer channel/signal processing capability of the terminal.

In an implementation, the PUSCH carries a first MAC PDU; the first MAC PDU includes a MAC CE, and an LCID of the MAC CE is indication information corresponding to the physical layer channel/signal processing capability of the terminal.

In an implementation, the PUSCH carries a second MAC PDU; at least one bit of padding information of the second MAC PDU is indication information corresponding to the physical layer channel/signal processing capability of the terminal.

In an implementation, a DMRS sequence and/or a DMRS pattern of the PUSCH corresponds to the physical layer channel/signal processing capability of the terminal.

In an implementation, in response to the physical layer channel/signal processing capability of the terminal being a relaxed processing capability, the DMRS sequence corresponds to at least one first scrambling code index; in response to the physical layer channel/signal processing capability of the terminal being an unrelaxed processing capability, the DMRS sequence corresponds to at least one second scrambling code index; and the at least one first scrambling code index and the at least one second scrambling code index do not overlap.

In an implementation, in response to the physical layer channel/signal processing capability of the terminal being a relaxed processing capability, the DMRS pattern indicates a first time-frequency domain position; in response to the physical layer channel/signal processing capability of the terminal being an unrelaxed processing capability, the DMRS pattern indicates a second time-frequency domain position; and there exists a difference between the first time-frequency domain position and the second time-frequency domain position.

In an implementation, a scrambling sequence of the PUSCH corresponds to the physical layer channel/signal processing capability of the terminal.

In an implementation, in response to the physical layer channel/signal processing capability of the terminal being a relaxed processing capability, the scrambling sequence of the PUSCH is a first scrambling sequence; in response to the physical layer channel/signal processing capability of the terminal being an unrelaxed processing capability, the scrambling sequence of the PUSCH is a second scrambling sequence; and a value range of the first scrambling sequence is different from a value range of the second scrambling sequence.

In an implementation, uplink control information carried by the PUSCH corresponds to the physical layer channel/signal processing capability of the terminal.

In an implementation, the random access message is a random access message A in two-step random access.

In an implementation, the random access message is a Mag3 in four-step random access.

In an implementation, a time domain position occupied by the PUCCH corresponds to the physical layer channel/signal processing capability of the terminal. The processing unit 1401 is further configured to perform detection at each candidate time domain position of the PUCCH to receive the random access message feedback.

In an implementation, the transceiver unit 1402 is further configured to send first indication information to the terminal; the first indication information is configured to indicate a candidate time domain position corresponding to a relaxed processing capability, and the first indication information is configured to indicate a candidate time domain position corresponding to an unrelaxed processing capability.

In an implementation, the transceiver unit 1402 is further configured to send second indication information to the terminal; the second indication information is configured to indicate a candidate time domain position corresponding to a relaxed processing capability, or the second indication information is configured to indicate a candidate time domain position corresponding to an unrelaxed processing capability; and there exists an association relationship between the candidate time domain position corresponding to the relaxed processing capability and the candidate time domain position corresponding to the unrelaxed processing capability.

In an implementation, the transceiver unit 1402 is specifically configured to receive the random access message feedback transmitted on the PUCCH according to a processing delay corresponding to a relaxed processing capability; a format of the PUCCH corresponds to the physical layer channel/signal processing capability of the terminal; and/or a cyclic shift adopted by the PUCCH corresponds to the physical layer channel/signal processing capability of the terminal; and/or

a time-frequency domain resource of the PUCCH corresponds to the physical layer channel/signal processing capability of the terminal.

It should be noted that the explanations of the method performed by the terminal as described in any of the foregoing embodiments with reference to FIG. 2 to FIG. 12 or the explanations of the method performed by the network device as described in any of the foregoing embodiments with reference to FIG. 13 are also applicable to the apparatus 140 for scheduling a terminal, with the similar implementation principles, which will not be described here again.

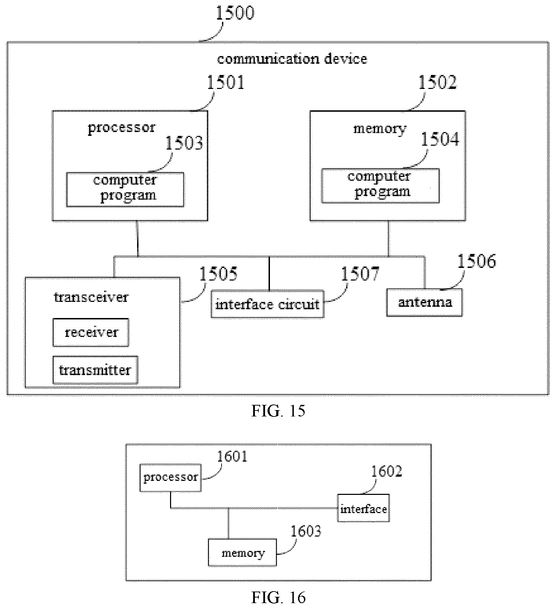

Referring to FIG. 15, FIG. 15 is a schematic block diagram of a communication device 1500 according to embodiments of the present invention. The communication device 1500 may be a network device, may also be a terminal, may also be a chip, a chip system, or a processor that supports the network device to implement the above method, or may also be a chip, a chip system, or a processor that supports the terminal to implement the above method. The device may be used to implement the methods as described in the above method embodiments, and for details, reference may be made to the descriptions on the above method embodiments.

The communication device 1500 may include one or more processors 1501. The processor 1501 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 1500 may further include one or more memories 1502 that may have stored therein a computer program 1504. The processor 1501 executes the computer program 1504 to cause the communication device 1500 to implement the methods as described in the above method embodiments. Optionally, the memory 1502 may have stored therein data. The communication device 1500 and the memory 1502 may be set separately or integrated together.

Optionally, the communication device 1500 may further include a transceiver 1505 and an antenna 1506. The transceiver 1505 may be called a transceiver unit, a transceiver machine, a transceiver circuit or the like, for implementing a transceiving function. The transceiver 1505 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1500 may further include one or more interface circuits 1507. The interface circuit 1507 is configured to receive a code instruction and transmit the code instruction to the processor 1501. The processor 1501 runs the code instruction to enable the communication device 1500 to execute the methods as described in the foregoing method embodiments.

The communication device 1500 is a terminal: the transceiver 1505 is configured to perform the step 201 in FIG. 2; perform the step 301 in FIG. 3; perform the step 401 in FIG. 4; perform the step 501 in FIG. 5; perform the step 601 in FIG. 6; perform the step 701 in FIG. 7; perform the step 801 in FIG. 8; perform the step 901 in FIG. 9; perform the step 1001 in FIG. 10; perform the step 1101 in FIG. 11; perform the step 1201 in FIG. 12.

The communication device 1500 is a network device: the transceiver 1505 is configured to perform the step 1301 in FIG. 13. The processor 1501 is configured to perform the step 1302 in FIG. 13.

In an implementation, the processor 1501 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read and write codes/data, or the above transceiver circuit, interface or interface circuit may be configured to transmit or transfer signals.

In an implementation, the processor 1501 may have stored therein a computer program 1503 that, when run on the processor 1501, causes the communication device 1500 to implement the method as described in the foregoing method embodiments. The computer program 1503 may be solidified in the processor 1501, and in this case, the processor 1501 may be implemented by hardware.

In an implementation, the communication device 1500 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (PMOS, as called positive channel metal oxide semiconductor), a bipolar junction transistor (BJT), a bipolar CMOS (BiCMOS), silicon germanium (SiGe), gallium arsenide (GaAs), etc.

The communication device described in the above embodiments may be the network device or the terminal, but the scope of the communication device described in the present invention is not limited thereto, and a structure of the communication device is not limited by FIG. 15. The communication device may be a stand-alone device or may be a part of a larger device. For example, the communication device may be:

(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 16. The chip shown in FIG. 16 includes a processor 1601 and an interface 1602. In the chip, one or more processors 1601 may be provided, and more than one interface 1602 may be provided.

Optionally, the chip further includes a memory 1603 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)) etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific implementations of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

**Claims**

1. A method for scheduling a terminal, performed by the terminal, comprising:

   sending a message to a network device;
   wherein the message is a random access message; wherein a physical uplink shared channel (PUSCH) occupied by the random access message corresponds to a physical layer channel/signal processing capability of the terminal, or the random access message carries indication information corresponding to the physical layer channel/signal processing capability of the terminal; or
   the message is a random access message feedback; wherein a physical uplink control channel (PUCCH) occupied by the random access message feedback corresponds to the physical layer channel/signal processing capability of the terminal.

2. The method according to claim 1, wherein an uplink shared channel occasion (PO) resource configured in the PUSCH corresponds to the physical layer channel/signal processing capability of the terminal.

3. The method according to claim 2, wherein in response to the physical layer channel/signal processing capability of the terminal being a relaxed processing capability, the uplink shared channel occasion (PO) resource configured in the PUSCH is a first PO resource;

   in response to the physical layer channel/signal processing capability of the terminal being an unrelaxed processing capability, the PO resource configured in the PUSCH is a second PO resource;
   wherein the first PO resource is a different PO resource from the second PO resource.

4. The method according to claim 3, wherein the first PO resource and the second PO resource both have a mapping relationship with a preamble sequence of a random access channel (PRACH).

5. The method according to claim 1, wherein in response to the physical layer channel/signal processing capability of the terminal being a relaxed processing capability, the PUSCH carries a first common control channel (CCCH);

   in response to the physical layer channel/signal processing capability of the terminal being an unrelaxed processing capability, the PUSCH carries a second CCCH;
   wherein the first CCCH has a different logical channel identifier (LCID) from that of the second CCCH, and the terminal indicates the physical layer channel/signal processing capability of the terminal by sending the first CCCH or the second CCCH.

6. The method according to claim 1, wherein the PUSCH carries a third CCCH; the third CCCH has an indication bit, and the indication bit is indication information corresponding to the physical layer channel/signal processing capability of the terminal.

7. The method according to claim 1, wherein the PUSCH carries a first physical layer media access control (MAC) protocol data unit (PDU);
wherein the first MAC PDU comprises a MAC control element (CE), and a logical channel identifier (LCID) of the MAC CE is indication information corresponding to the physical layer channel/signal processing capability of the terminal.

8. The method according to claim 1, wherein the PUSCH carries a second MAC PDU;
wherein at least one bit of padding information of the second MAC PDU is indication information corresponding to the physical layer channel/signal processing capability of the terminal.

9. The method according to claim 1, wherein a demodulation reference signal (DMRS) sequence and/or a DMRS pattern of the PUSCH corresponds to the physical layer channel/signal processing capability of the terminal.

10. The method according to claim 9, wherein in response to the physical layer channel/signal processing capability of the terminal being a relaxed processing capability, the DMRS sequence corresponds to at least one first scrambling code index;

   in response to the physical layer channel/signal processing capability of the terminal being an unrelaxed processing capability, the DMRS sequence corresponds to at least one second scrambling code index;
   wherein the at least one first scrambling code index and the at least one second scrambling code index do not overlap.

11. The method according to claim 9, wherein in response to the physical layer channel/signal processing capability of the terminal being a relaxed processing capability, the DMRS pattern corresponds to a DMRS first time-frequency domain position;

   in response to the physical layer channel/signal processing capability of the terminal being an unrelaxed processing capability, the DMRS pattern corresponds to a second time-frequency domain position;
   wherein there exists a difference between the first time-frequency domain position and the second time-frequency domain position.

12. The method according to claim 1, wherein a scrambling sequence of the PUSCH corresponds to the physical layer channel/signal processing capability of the terminal.

13. The method according to claim 12, wherein in response to the physical layer channel/signal processing capability of the terminal being a relaxed processing capability, the scrambling sequence of the PUSCH is a first scrambling sequence;

   in response to the physical layer channel/signal processing capability of the terminal being an unrelaxed processing capability, the scrambling sequence of the PUSCH is a second scrambling sequence;
   wherein a value range of the first scrambling sequence is different from a value range of the second scrambling sequence.

14. The method according to claim 1, wherein uplink control information carried by the PUSCH corresponds to the physical layer channel/signal processing capability of the terminal.

15. The method according to any one of claims 1 to 14, wherein the random access message is a random access message A in two-step random access.

16. The method according to any one of claims 2 to 14, wherein the random access message is a Mag3 in four-step random access.

17. The method according to any one of claims 1 to 16, wherein a time domain position occupied by the PUCCH corresponds to the physical layer channel/signal processing capability of the terminal.

18. The method according to claim 17, further comprising: receiving first indication information sent by the network device;
wherein the first indication information is configured to indicate a candidate time domain position corresponding to a relaxed processing capability, and the first indication information is configured to indicate a candidate time domain position corresponding to an unrelaxed processing capability.

19. The method according to claim 17, further comprising: receiving second indication information sent by the network device;

wherein the second indication information is configured to indicate a candidate time domain position corresponding to a relaxed processing capability, or the second indication information is configured to indicate a candidate time domain position corresponding to an unrelaxed processing capability;
there exists an association relationship between the candidate time domain position corresponding to the relaxed processing capability and the candidate time domain position corresponding to the unrelaxed processing capability.

20. The method according to any one of claims 1 to 16, wherein

a format of the PUCCH corresponds to the physical layer channel/signal processing capability of the terminal; and/or
a cyclic shift adopted by the PUCCH corresponds to the physical layer channel/signal processing capability of the terminal; and/or
a time-frequency domain resource of the PUCCH corresponds to the physical layer channel/signal processing capability of the terminal.

21. A method for scheduling a terminal, performed by a network device, comprising:

receiving a message sent by a terminal;
scheduling a subsequent transmission of the terminal according to a processing delay corresponding to the message,
wherein the message is a random access message; wherein a physical uplink shared channel (PUSCH) occupied by the random access message corresponds to a physical layer channel/signal processing capability of the terminal, or the random access message carries indication information corresponding to the physical layer channel/signal processing capability of the terminal; or
the message is a random access message feedback; wherein a physical uplink control channel (PUCCH) occupied by the random access message feedback corresponds to the physical layer channel/signal processing capability of the terminal.

22. The method according to claim 21, wherein an uplink shared channel occasion (PO) resource configured in the PUSCH corresponds to the physical layer channel/signal processing capability of the terminal.

23. The method according to claim 22, wherein in response to the physical layer channel/signal processing capability of the terminal being a relaxed processing capability, the uplink shared channel occasion (PO) resource configured in the PUSCH is a first PO resource;

in response to the physical layer channel/signal processing capability of the terminal being an unrelaxed processing capability, the PO resource configured in the PUSCH is a second PO resource;
wherein the first PO resource is a different PO resource from the second PO resource.

24. The method according to claim 23, wherein the first PO resource and the second PO resource both have a mapping relationship with a preamble sequence of a random access channel (PRACH) occupied by the random access message.

25. The method according to claim 21, wherein in response to the physical layer channel/signal processing capability of the terminal being a relaxed processing capability, the PUSCH carries a first common control channel (CCCH);

in response to the physical layer channel/signal processing capability of the terminal being an unrelaxed processing capability, the PUSCH carries a second CCCH;
wherein the first CCCH has a different logical channel identifier (LCID) from that of the second CCCH, and the terminal indicates the physical layer channel/signal processing capability of the terminal by sending the first CCCH or the second CCCH.

26. The method according to claim 21, wherein the PUSCH carries a third CCCH; the third CCCH has an indication bit, and the indication bit is indication information corresponding to the physical layer channel/signal processing capability of the terminal.

27. The method according to claim 21, wherein the PUSCH carries a first physical layer media access control (MAC) protocol data unit (PDU);

wherein the first MAC PDU comprises a MAC control element (CE), and a logical channel identifier (LCID) of the MAC CE is indication information corresponding to the physical layer channel/signal processing capability of the terminal.

28. The method according to claim 21, wherein the PUSCH carries a second MAC PDU; wherein at least one bit of padding information of the second MAC PDU is indication information corresponding to the physical layer channel/-signal processing capability of the terminal.

29. The method according to claim 21, wherein a demodulation reference signal (DMRS) sequence and/or a DMRS pattern of the PUSCH corresponds to the physical layer channel/signal processing capability of the terminal.

30. The method according to claim 29, wherein in response to the physical layer channel/signal processing capability of the terminal being a relaxed processing capability, the DMRS sequence corresponds to at least one first scrambling code index;

in response to the physical layer channel/signal processing capability of the terminal being an unrelaxed processing capability, the DMRS sequence corresponds to at least one second scrambling code index; wherein the at least one first scrambling code index and the at least one second scrambling code index do not overlap.

31. The method according to claim 30, wherein in response to the physical layer channel/signal processing capability of the terminal being a relaxed processing capability, the DMRS pattern indicates a first time-frequency domain position;

in response to the physical layer channel/signal processing capability of the terminal being an unrelaxed processing capability, the DMRS pattern indicates a second time-frequency domain position; wherein there exists a difference between the first time-frequency domain position and the second time-frequency domain position.

32. The method according to claim 21, wherein a scrambling sequence of the PUSCH corresponds to the physical layer channel/signal processing capability of the terminal.

33. The method according to claim 32, wherein in response to the physical layer channel/signal processing capability of the terminal being a relaxed processing capability, the scrambling sequence of the PUSCH is a first scrambling sequence;

in response to the physical layer channel/signal processing capability of the terminal being an unrelaxed processing capability, the scrambling sequence of the PUSCH is a second scrambling sequence; wherein a value range of the first scrambling sequence is different from a value range of the second scrambling sequence.

34. The method according to claim 21, wherein uplink control information carried by the PUSCH corresponds to the physical layer channel/signal processing capability of the terminal.

35. The method according to any one of claims 21 to 34, wherein the random access message is a random access message A in two-step random access.

36. The method according to any one of claims 22 to 34, wherein the random access message is a Mag3 in four-step random access.

37. The method according to any one of claims 21 to 36, wherein a time domain position occupied by the PUCCH corresponds to the physical layer channel/signal processing capability of the terminal;

wherein the method further comprises:

performing detection at each candidate time domain position of the PUCCH to receive the random access message feedback.

38. The method according to claim 37, further comprising: sending first indication information to the terminal; wherein the first indication information is configured to indicate a candidate time domain position corresponding to a relaxed processing capability, and the first indication information is configured to indicate a candidate time domain position corresponding to an unrelaxed processing capability.

39. The method according to claim 37, further comprising: sending second indication information to the terminal;

wherein the second indication information is configured to indicate a candidate time domain position corresponding to a relaxed processing capability, or the second indication information is configured to indicate a candidate time domain position corresponding to an unrelaxed processing capability;
there exists an association relationship between the candidate time domain position corresponding to the relaxed processing capability and the candidate time domain position corresponding to the unrelaxed processing capability.

40. The method according to any one of claims 21 to 36, wherein receiving the random access message and/or the random access message feedback sent by the terminal comprises:

receiving the random access message feedback transmitted on the PUCCH according to a processing delay corresponding to a relaxed processing capability;
wherein a format of the PUCCH corresponds to the physical layer channel/signal processing capability of the terminal; and/or
a cyclic shift adopted by the PUCCH corresponds to the physical layer channel/signal processing capability of the terminal; and/or
a time-frequency domain resource of the PUCCH corresponds to the physical layer channel/signal processing capability of the terminal.

41. An apparatus for scheduling a terminal, comprising:

a transceiver unit, configured to send a message to a network device;
wherein the message is a random access message; wherein a physical uplink shared channel (PUSCH) occupied by the random access message corresponds to a physical layer channel/signal processing capability of the terminal, or the random access message carries indication information corresponding to the physical layer channel/signal processing capability of the terminal; or
the message is a random access message feedback; wherein a physical uplink control channel (PUCCH) occupied by the random access message feedback corresponds to the physical layer channel/signal processing capability of the terminal.

42. An apparatus for scheduling a terminal, comprising:

a transceiver unit, configured to receive a message sent by a terminal;
a processing unit, configured to schedule a subsequent transmission of the terminal according to a processing delay corresponding to the message,
wherein the message is a random access message; wherein a physical uplink shared channel (PUSCH) occupied by the random access message corresponds to a physical layer channel/signal processing capability of the terminal, or the random access message carries indication information corresponding to the physical layer channel/signal processing capability of the terminal; or
the message is a random access message feedback; wherein the random access message carries indication information corresponding to the physical layer channel/signal processing capability of the terminal.

43. A communication device, comprising:

a processor; and
a memory having stored therein a computer program,
wherein the processor is configured to execute the computer program stored in the memory to cause the device to perform the method according to any one of claims 1 to 20.

44. A communication device, comprising:

a processor; and
a memory having stored therein a computer program,
wherein the processor is configured to execute the computer program stored in the memory to cause the device to perform the method according to any one of claims 21 to 40.

**45.** A communication device, comprising:

a processor; and
an interface circuit configured to receive code instructions and transmit the code instructions to the processor,
wherein the processor is configured to run the code instructions to perform the method according to any one of claims 1 to 20.

**46.** A communication device, comprising:

a processor; and
an interface circuit configured to receive code instructions and transmit the code instructions to the processor,
wherein the processor is configured to run the code instructions to perform the method according to any one of claims 21 to 40.

**47.** A computer-readable storage medium having stored therein instructions that, when executed, cause the method according to any one of claims 1 to 20 to be implemented.

**48.** A computer-readable storage medium having stored therein instructions that, when executed, cause the method according to any one of claims 21 to 40 to be implemented.

network device 101          terminal 102

FIG. 1

a random access message and/or a random access message feedback is sent to a network device; a PUSCH occupied by the random access message corresponds to a physical layer channel/signal processing capability of the terminal, and/or the random access message carries indication information corresponding to the physical layer channel/signal processing capability of the terminal; a PUCCH occupied by the random access message feedback corresponds to the physical layer channel/signal processing capability of the terminal ⌒⌣201

FIG. 2

a random access message is sent to a network device to indicate the physical layer channel/signal processing capability of the terminal; the physical layer channel/signal processing capability of the terminal is indicated via a PO configured in the PUSCH occupied by the random access message; physical layer channel/signal processing capabilities of different terminals correspond to different PO resources; or the random access message carries indication information for indicating the physical layer channel/signal processing capability of the terminal; the physical layer channel/signal processing capability of the terminal is: a relaxed processing capability, or an unrelaxed processing capability ⌒⌣301

FIG. 3

a random access message and/or a random access message feedback is sent to a network device to indicate the physical layer channel/signal processing capability of the terminal; the random access message is sent via a PUSCH, the PUSCH carries a first CCCH or a second CCCH, where the first CCCH and the second CCCH correspond to physical layer channel/signal processing capabilities of different terminals; or the random access message carries a corresponding indication information for indicating the physical layer channel/signal processing capability of the terminal; the physical layer channel/signal processing capability of the terminal is: a relaxed processing capability, or an unrelaxed processing capability ⌒⌣401

FIG. 4

a random access message is sent to a network device to indicate the physical layer channel/signal processing capability of the terminal; the random access message is sent via a PUSCH, the PUSCH carries a third CCCH, an indication bit in the third CCCH is configured to indicate indication information corresponding to the physical layer channel/signal processing capability of the terminal; and the physical layer channel/signal processing capability of the terminal is: a relaxed processing capability, or an unrelaxed processing capability ⌒⌣501

FIG. 5

a random access message is sent to a network device to indicate the physical layer channel/signal processing capability of the terminal; the random access message carries a first MAC PDU, an indication bit of the first MAC PDU is configured to indicate the physical layer channel/signal processing capability of the terminal; and the physical layer channel/signal processing capability of the terminal is: a relaxed processing capability, or an unrelaxed processing capability

601

FIG. 6

a random access message is sent to a network device to indicate the physical layer channel/signal processing capability of the terminal; the random access message carries a second MAC PDU, padding information of the second MAC PDU is configured to indicate the physical layer channel/signal processing capability of the terminal; and the physical layer channel/signal processing capability of the terminal is a relaxed processing capability or an unrelaxed processing capability

701

FIG. 7

a random access message is sent to a network device to indicate the physical layer channel/signal processing capability of the terminal; the random access message includes a DMRS sequence and/or a DMRS pattern, the terminal carries a first CCCH or a second CCCH in the PUSCH, the first CCCH and the second CCCH correspond to physical layer channel/signal processing capabilities of different terminals; and the physical layer channel/signal processing capability of the terminal is: a relaxed processing capability, or an unrelaxed processing capability

801

FIG. 8

a random access message is sent to a network device to indicate the physical layer channel/signal processing capability of the terminal; a scrambling sequence of the random access message is configured to indicate the physical layer channel/signal processing capability of the terminal; different scrambling sequences correspond to physical layer channel/signal processing capabilities of different terminals; and the physical layer channel/signal processing capability of the terminal is: a relaxed processing capability, or an unrelaxed processing capability

901

FIG. 9

a random access message is sent to a network device to indicate the physical layer channel/signal processing capability of the terminal; the random access message carries UCI, which is configured to indicate the physical layer channel/signal processing capability of the terminal; and the physical layer channel/signal processing capability of the terminal is: a relaxed processing capability, or an unrelaxed processing capability

1001

FIG. 10

a random access message feedback is sent to a network device to indicate the physical layer channel/signal processing capability of the terminal; the physical layer channel/signal processing capability of the terminal is indicated by a PUCCH resource position occupied by the random access message feedback; or the random access message feedback carries corresponding indication information for indicating the physical layer channel/signal processing capability of the terminal; the physical layer channel/signal processing capability of the terminal is: a relaxed processing capability, or an unrelaxed processing capability

1101

FIG. 11

a random access message feedback is sent to a network device to indicate the physical layer channel/signal processing capability of the terminal; the physical layer channel/signal processing capability of the terminal is indicated by a format and/or a cyclic shift of a PUCCH occupied by the random access message feedback; and the physical layer channel/signal processing capability of the terminal is: a relaxed processing capability, or an unrelaxed processing capability

1201

FIG. 12

a random access message and/or a random access message feedback sent by a terminal is received; the random access message and/or the random access message feedback is configured to at least indicate a physical layer channel/signal processing capability of the terminal

1301

a processing delay corresponding to the terminal is determined according to the random access message and/or the random access message feedback, and subsequent transmission of the terminal is scheduled according to the processing delay

1302

FIG. 13

1400

apparatus for scheduling terminal

processing unit    1401

transceiver unit    1402

FIG. 14

1500

communication device

1501

processor

1503

computer
program

1502

memory

1504

computer
program

transceiver

1505

receiver

transmitter

interface circuit

1507

antenna

1506

FIG. 15

processor

1601

interface

1602

memory

1603

FIG. 16

## INTERNATIONAL SEARCH REPORT

| International application No. |
|---|
| **PCT/CN2022/089406** |

| **A.** | **CLASSIFICATION OF SUBJECT MATTER** |
|---|---|
| | H04L 5/00(2006.01)i; H04W 74/08(2009.01)i; H04W 72/04(2009.01)i |

According to International Patent Classification (IPC) or to both national classification and IPC

| **B.** | **FIELDS SEARCHED** |
|---|---|

Minimum documentation searched (classification system followed by classification symbols)
    H04L; H04W

Documentation searched other than minimum documentation to the extent that such documents are included in the fields searched

Electronic data base consulted during the international search (name of data base and, where practicable, search terms used)
    3GPP; VEN; CNABS; CNTXT; USTXT; EPTXT; WOTXT; CNKI: 随机接入, 消息, 反馈, 处理能力, 后续, 传输, 机会, 调度, 无需, 额外, RACH, PRACH, feedback, HARQ, process, capability, transmission, schedule?, REDCAP, NON-REDCAP, PUSCH, occasion, PO, MSG3, MSGA

| **C.** | **DOCUMENTS CONSIDERED TO BE RELEVANT** | | |
|---|---|---|---|
| Category* | Citation of document, with indication, where appropriate, of the relevant passages | | Relevant to claim No. |
| X | CN 114223229 A (BEIJING XIAOMI MOBILE SOFTWARE CO., LTD.) 22 March 2022 (2022-03-22) description, paragraphs [0084]-[0203] | | 1-48 |
| X | CN 114175820 A (BEIJING XIAOMI MOBILE SOFTWARE CO., LTD.) 11 March 2022 (2022-03-11) description, paragraphs [0045]-[0226] | | 1-48 |
| A | VIVORAPPORTEUR. "Running MAC CR for RedCap" *3GPP TSG-RAN WG2 Meeting #116-e R2-2111628*, 19 November 2021 (2021-11-19), entire document | | 1-48 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 December 2022** | **14 December 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

### INTERNATIONAL SEARCH REPORT
#### Information on patent family members

| International application No. |
| --- |
| **PCT/CN2022/089406** |

| Patent document cited in search report | | | Publication date (day/month/year) | Patent family member(s) | Publication date (day/month/year) |
| --- | --- | --- | --- | --- | --- |
| CN | 114223229 | A | 22 March 2022 | None | |
| CN | 114175820 | A | 11 March 2022 | None | |

Form PCT/ISA/210 (patent family annex) (January 2015)

**REFERENCES CITED IN THE DESCRIPTION**

**Non-patent literature cited in the description**

- *3GPP standard TS38.214*